# EUROPÄISCHE PATENTSCHRIFT

(11) **EP 3 986 693 B1**
(45) Veröffentlichungstag und Bekanntmachung des Hinweises auf die Patenterteilung: **19.10.2022**
(21) Anmeldenummer: 21727384.6
(22) Anmeldetag: 12.05.2021
(51) Int. Cl.: B29C 49/48, B29C 49/12, B29L 31/00, B29C 33/30, B29C 49/06, B29C 49/36

(54) **BLASANLAGE UND -VERFAHREN ZUR HERSTELLUNG VON KUNSTSTOFFFLASCHEN UNTERSCHIEDLICHER VOLUMINA**
BLOW MOLDING APPARATUS AND BLOW-MOLDING PROCESS FOR PRODUCING PLASTIC BOTTLES OF DIFFERENT VOLUMES
APPAREIL DE MOULE DE SOUFFLAGE ET PROCÉDÉ DE MOULAGE PAR SOUFFLAGE POUR LA PRODUCTION DE BOUTEILLES EN PLASTIQUE DE DIFFÉRENTS VOLUMES

(30) Priorität: 13.05.2020 DE 102020113013
(43) Veröffentlichungstag der Anmeldung: 27.04.2022
(73) Patentinhaber: Till, Volker, 65719 Hofheim am Taunus (DE)
(72) Erfinder: Till, Volker, 65719 Hofheim am Taunus (DE)
(74) Vertreter: Keil & Schaafhausen Patentanwälte PartGmbB
(86) Internationale Anmeldenummer: PCT/EP2021/062758
(87) Internationale Veröffentlichungsnummer: WO 2021/229019

(56) Entgegenhaltungen:
- EP-B1- 0 253 819
- WO-A2-2010/122481
- DE-A1- 2 048 636
- US-A- 4 177 239
- US-A1- 2008 260 884
- US-A1- 2015 290 867

## Beschreibung

Die vorliegende Erfindung betrifft eine Blasanlage zur Herstellung von Kunststoffflaschen durch Streckblasen mit mindestens einer Blasform, wobei die Kunststoffflaschen jeweils zumindest einen Flaschenboden, einen Flaschenhals und einen Mündungsbereich aufweisen, wobei die Blasform in einem geschlossenen Zustand der Blasform einen Innenraum mit einer Kavität, wobei sich der Innenraum entlang einer Längsrichtung von einem Mündungsabschnitt für den Mündungsbereich bis zu einem Formboden zur Ausbildung des Flaschenbodens erstreckt. Die vorliegende Erfindung bezieht sich außerdem auf ein Verfahren zur Herstellung von Kunststoffflaschen durch Streckblasen.

Getränke werden inzwischen in vielen Fällen in Kunststoffflaschen abgefüllt. Dabei verwenden die Abfüller eine Vielzahl verschiedener Ausführungen von Kunststoffflaschen. Insbesondere hat sich eine große Anzahl verschiedener Kunststoffflaschen mit unterschiedlichen Füllvolumina etabliert.

Für die Herstellung der Kunststoffflaschen bedeutet das eine große Herausforderung. Für Kunststoffflaschen unterschiedlicher Füllvolumina wird jeweils eine spezifische Blasform benötigt. Mit konventionellen Blasanlagen und Blasformen für Kunststoffflaschen ist es nicht möglich, in einer Produktionslinie gleichzeitig verschiedene Kunststofflaschen mit unterschiedlichen Füllvolumina herzustellen. Wenn Kunststofflaschen mit zwei unterschiedlichen Füllvolumina gleichzeitig hergestellt werden sollen, sind dafür getrennte Blasformen oder sogar getrennte Produktionslinien erforderlich.

Wenn in derselben Produktionslinie Kunststoffflaschen mit einem anderen Füllvolumen hergestellt werden sollen, müssen die Blasformen umgerüstet werden. Dafür muss die Blasanlage angehalten werden. Das kostet Zeit und Geld und mindert die Produktion.

Entsprechend werden die Blasanlagen häufig für eine größere Kapazität ausgelegt, als bei kontinuierlichem Betrieb nötig wäre. Das ermöglicht es, die Stillstandzeiten auszugleichen und die erforderliche Gesamtproduktion zu erreichen. Allerdings werden die Blasanlagen selbst und deren Betrieb aufgrund der Überdimensionierung teurer. Zudem benötigen die Blasanlagen mehr Platz. Schließlich bleibt die Flexibilität zur Herstellung von Kunststoffflaschen mit unterschiedlichen Volumina aufgrund der Stillstandzeiten, die für die Umrüstung notwendig sind, trotz allem begrenzt.

Zur effizienten Nutzung einer Blasanlage müssen die Kunststoffflaschen mit einem bestimmten Füllvolumen jeweils in einer Charge in großen Mengen hergestellt werden und dann eingelagert werden. In der nächsten Charge werden Kunststoffflaschen mit einem anderen Füllvolumen hergestellt und eingelagert, und so weiter. Die Kunststofflaschen mit unterschiedlichen Füllvolumina werden in Lagern aufbewahrt, damit jederzeit eine ausreichende Versorgung mit Kunststoffflaschen aller benötigten Füllvolumina sichergestellt ist. Für die Abfüllung werden die Kunststoffflaschen mit dem gewünschten Füllvolumen wahlweise aus dem Vorrat entnommen und mit Getränken befüllt.

Die Lagerung der Kunststoffflaschen mit unterschiedlichen Füllvolumina braucht Platz und bildet Kapital. Wenn sich der Bedarf für Kunststoffflaschen mit einem bestimmten Füllvolumen plötzlich verringert, können zu viele Kunststoffflaschen eingelagert sein. Wenn umgekehrt der Bedarf an Kunststoffflaschen mit einem bestimmten Füllvolumen plötzlich ansteigt, dann kann es vorkommen, dass nicht genügend Kunststoffflaschen dieses Typs eingelagert sind.

Alternativ werden für Kunststoffflaschen unterschiedlicher Volumina jeweils eigene Blasanlagen vorgehalten. Wenn Kunststoffflaschen eines bestimmten Volumens jedoch längere Zeit nicht gebraucht werden, dann steht die zugehörige Blasanlage still. Das mindert die Rentabilität. Zudem brauchen die verschiedenen Blasanlagen viel Platz und erfordern hohe Investitionskosten.

WO 2010/122481 A2 zeigt eine Blasformvorrichtung mit einem Karussell mit einer Vielzahl von Blasformen. Die jeweilige Blasform dient zum Blasformen von Kunststoffbehältern aus Vorformlingen und umfasst zwei aufeinander zu und voneinander weg bewegliche Formhälften sowie ferner einen Formboden, der vertikal relativ zu den beiden Formhälften zwischen einer abgesenkten Ruheposition und einer angehobenen Position, in welcher der Formboden mit den beiden Formhälften in Eingriff steht, beweglich ist.

In US 2015/0290867 A1 wird ein vorgeheizter Preform in eine Blasform eingebracht. Ein Streckdorn streckt den Preform vor und wird bis zu einem Formboden in die Kavität hineingefahren; dabei befindet sich der Formboden in einer unteren Position. Während des Streckblasens wird der Formboden angehoben, um eine gewünschte Molekülausrichtung und Steifigkeit sowie eine bessere Ausformung des Flaschenbodens zu erreichen.

US 4,177,239 A schlägt ein Streckblasen von Kunststoffflaschen in mehreren Schritten vor. Ein Preform wird in eine Blasform eingebracht und durch einen Streckdorn mechanisch in die Länge gestreckt. Dabei ist ein Formboden zunächst in einer vom Mündungsabschnitt ferneren Position angeordnet und der Streckdorn verlängert den Preform zunächst soweit, dass er am Formboden in dessen mündungsferner Position anliegt. Der Perform wird vorübergehend länger als die fertige Kunststoffflasche. Während des mechanischen Verstreckens wird der Preform pneumatisch vor-expandiert. Dann wird der Formboden verfahren, um die Kavität auf das finale Maß für die Kunststoffflasche zu reduzieren. Der zukünftige Flaschenboden wird nach innen gestülpt.

US 2008/0260884 A1 zeigt eine Blasform zum Streckblasformen mit zwei gegeneinander beweglichen Formhälften mit entsprechenden Halbschalen und einem Formboden. Zur Herstellung von Kunststoffflaschen mit einem anderen Volumen müssen die Halbschalen gegen andere Halbschalen ausgetauscht werden.

Aus DE 20 48 636 A1 ist eine mehrteilige Blasform zum Streckblasen von Kunststoffflaschen aus Vorformlingen bekannt mit einem Rohrstück, einem geteilten Deckel und einem in dem Rohrstück längsverschiebbaren Bodenstück. Auf einer Tragplatte steht ein Zylinder mit bestimmter Höhe, auf welchem das Bodenstück aufliegt. Soll ein Hohlkörper mit größerem Volumen hergestellt werden, wird anstelle des Zylinders ein niedrigerer Zylinder in das Rohrstück eingesetzt.

Aus der Offenlegungsschrift DE 1 479 631 A1 ist eine Blasform zum Herstellen von fassartigen oder trommelartigen Kunststoffbehältern aus schlauchförmigen Vorformlingen bekannt. Lediglich ein deckelartiges Formoberteil ist aus zu öffnenden und zu schließenden Formplatten hergestellt. Dagegen ist ein relativ großes Formunterteil aus einem einfachen einteiligen und feststehenden, zylindrischen Blechmantel mit einem Boden hergestellt. Das einteilige Formunterteil ist seitlich verschiebbar ausgebildet. So kann die Blasform nach dem Blasvorgang aus der Bahn eines von der Schlauchherstellungsmaschine gefertigten Schlauches gebracht werden. Dabei werden für dieselbe Schlauchherstellungsmaschine mehrere seitlich verschiebbare Blasformen verwendet.

Die Offenlegungsschrift DE 35 16 175 A1 schlägt vor, die aus DE 1 479 631 A1 bekannte Blasform mit einer Längenverstellung auszurüsten. Die modifizierte Blasform umfasst ein druckdicht geführtes unteres Abschlussteil und eine Stellvorrichtung zur axialen Verstellung des Abschlussteils. Das Abschlussteil ist innenseitig in der Form geführt. Die Form ist an einer Trägerplatte verankert, welche über Laufräder auf Schienen abgestützt ist.

Bei den zwei zuletzt genannten Blasformen ist zumindest ein zylindrischer Mittelteil der Blasformen jeweils einteilig ausführt. Die fertiggestellten Behälter müssen entlang der Längsrichtung entformt (entnommen) werden. Das ist zeitaufwendig. Zudem sind beide vorgeschlagenen System komplex und benötigen viel Platz, da das jeweilige Formunterteil seitlich verschiebbar ist. Zum Entformen eines fertigen Behälters wird das Formunterteil seitlich verfahren. Ansonsten wäre die Schlauchherstellungsmaschine beim Entformen des fertigen Behälters nach oben im Weg.

Aus diesen Gründen eignet sich die aus DE 1 479 631 A1 bekannte Modifikation nicht für die kostengünstige Massenproduktion von Kunststoffflaschen für die Getränkeindustrie bzw. für die Getränkeabfüllung.

Zudem werden Kunststoffflaschen für die Abfüllung von Getränken üblicherweise durch Streckblasen aus sogenannten Preforms hergestellt und nicht durch Extrusionsblasformen aus schlauchförmigen Vorformlingen. Die vorgenannten Blasformen sind deshalb nicht für die Herstellung von Kunststoffflaschen durch Streckblasen vorgesehen.

Ein Preform ist ein Halbzeug zur Herstellung einer Kunststoffflasche. Preforms sind typischerweise durch Spritzguss hergestellt. Der Preform umfasst entlang seiner Längsrichtung einen Mündungsbereich und einen Streckbereich.

An einem äußeren Ende des Mündungsbereichs in der Längsrichtung befindet sich ein Verschlussbereich. Der Verschlussbereich weist üblicherweise eine im Wesentlichen zylindermantelförmige Grundform auf. Der Verschlussbereich umgrenzt eine Flaschenöffnung. An einer äußeren Umfangsfläche des Verschlussbereichs ist häufig ein Deckelgewinde vorgesehen. Mittels des Deckelgewindes kann ein Verschlussdeckel aufgeschraubt werden. Der Mündungsbereich weist auf einer der Flaschenöffnung entlang der Längsrichtung gegenüberliegenden Seite außerdem einen Neckring auf. Der Neckring ist im Wesentlichen kreisringförmig. Er steht quer zu der Längsrichtung radial nach außen über den restlichen Mündungsbereich vor. Der Neckring dient zum Handling des Preforms und der daraus hergestellten Kunststoffflasche. Er wird auch als Trag- oder Transportring bezeichnet.

Entlang der Längsrichtung schließt sich der Streckbereich des Preforms an den Mündungsbereich an. Der Streckbereich besteht aus einem zylindermantelförmigen Mittelbereich und einem Bodenbereich. Der Bodenbereich verschließt einen Innenraum des Preforms an einem Bodenende des Preforms. Das Bodenende bildet das dem Mündungsbereich entlang der Längsrichtung abgewandte Ende des Preforms. Typischerweise ist der Bodenbereich konvex gerundet, beispielsweise halbkugelartig geformt, und geht kontinuierlich in den Mittelbereich des Streckbereichs über.

Zur Herstellung der Kunststoffflasche wird der Preform zunächst in eine Handlingvorrichtung aufgenommen. Mit der Handlingvorrichtung wird der Preform in eine einer Blasform positioniert und die Blasform wird geschlossen. Im Detail wird der Mündungsbereich des Preforms in einen Mündungsabschnitt des Innenraums positioniert. Der Neckring des Preforms ist in einer Neckringaufnahme der Blasform positioniert und stabilisiert. Dadurch ist der Streckbereich des Preforms korrekt in einer Kavität der Blasform korrekt positioniert.

Der Mündungsbereich mit dem Verschlussbereich und dem Neckring wird bei der Herstellung der Kunststoffflasche aus dem Preform nicht verformt, zumindest nicht wesentlich verstreckt. Der Mündungsbereich der Kunststoffflasche entspricht also dem Mündungsbereich des Preforms.

Dagegen wird der Streckbereich des Preforms bei der Herstellung der Kunststoffflasche aus dem Preform verstreckt. Anders als beim Extrusionsblasen wird der Preform dabei nicht nur in radialer Richtung (also quer zu der Längsrichtung) verstreckt. Die Verstreckung erfolgt auch in der Längsrichtung.

Die Aufgabe der vorliegenden Erfindung besteht darin, die flexible, bedarfsgerechte Herstellung von Kunststoffflaschen mit unterschiedlichen Volumina durch Streckblasen in der Massenproduktion zu ermöglichen.

Die obige Aufgabe wird gelöst durch eine Blasanlage zur Herstellung von Kunststoffflaschen durch Streckblasen mit den Merkmalen des Anspruchs 1.

Die Blasanlage umfasst mindestens eine Blasform. Die mindestens eine Blasform dient zur Herstellung von Kunststoffflaschen durch Streckblasen, insbesondere aus Preforms, wobei die Kunststoffflaschen jeweils zumindest einen Flaschenboden, einen Flaschenhals und einen Mündungsbereich aufweisen;
wobei die mindestens eine Blasform in einem geschlossenen Zustand der mindestens einen Blasform einen Innenraum mit einer Kavität ausbildet, wobei sich der Innenraum entlang einer Längsrichtung von einem Mündungsabschnitt für den Mündungsbereich bis zu einem Formboden zur Ausbildung des Flaschenbodens erstreckt;
wobei eine Bauchlänge der Kavität in der Längsrichtung zwischen einem Halsabschnitt der Kavität zur Ausbildung des Flaschenhalses und dem Formboden verstellbar ist, sodass die mindestens eine Blasform zum Herstellen von Kunststoffflaschen mit unterschiedlichen Volumina ausgebildet ist; und
wobei die mindestens eine Blasform über eine Gesamtlänge des Innenraums in der Längsrichtung seitlich öffenbar ist.

Typischerweise weisen Kunststoffflaschen jeweils den Flaschenboden, den Flaschenbauch, einen Flaschenhals und den Mündungsbereich auf. Die mindestens eine Blasform (im Folgenden auch kurz "die Blasform") ist dazu eingerichtet, dass die Bauchlänge der Kavität in der Längsrichtung verstellbar ist. Die Bauchlänge kann also unterschiedlich eingestellt werden. Die Bauchlänge definiert eine Länge des Flaschenbauchs der fertigen Flasche in der Längsrichtung. Wenn die Bauchlänge in der Längsrichtung verstellt wird, verändert sich auch ein Innenvolumen der geschlossenen Kavität. Entsprechend ändert sich das Volumen einer Kunststoffflasche, die in der geschlossenen Blasform aufgeblasen wird. Mit den Volumina der Kunststoffflaschen sind bevorzugt deren Innen- bzw. Füllvolumina gemeint.

Die mindestens eine Blasform erlaubt es, unmittelbar nacheinander ohne Umrüstung oder gar Austausch der Blasform Kunststoffflaschen mit unterschiedlichen Volumina herzustellen. Mit anderen Worten: Kunststoffflaschen mit unterschiedlichen Volumina können in beliebiger Reihenfolge unmittelbar nacheinander im Mischbetrieb produziert werden. Die Blasform ermöglicht eine sehr flexible und bedarfsgerechte Bereitstellung unterschiedlich großer Kunststofflaschen.

Die Blasform ist eingerichtet zum seitlichen Entformen quer zu der Längsrichtung der (jeweiligen) in der Blasform hergestellten Kunststoffflasche. Seitliches Entformen bedeutet Entformen (zumindest im Wesentlichen) quer zu der Längsrichtung. Da die Blasform über eine Gesamtlänge des Innenraums in der Längsrichtung seitlich öffenbar ist, kann die in der Blasform hergestellte Kunststoffflasche sehr schnell und einfach seitlich aus der Blasform entformt werden. Die fertige Kunststoffflasche wird beispielsweise herausgezogen, herausgedrückt, herausgepustet und/oder herausgekippt werden. Die Möglichkeit zum schnellen Entformen der fertigen Kunststoffflasche ist absolut entscheidend für die Tauglichkeit der Blasform für die Massenproduktion. Nur so können die hohen Produktionsleisten, für die moderne Getränkeindustrie erforderlich sind, auf begrenztem Raum realisiert werden.

In der Massenproduktion müssen beispielsweise bis zu 2400 Flaschen pro Stunde in derselben Blasform herstellbar sein. Die vorgeschlagene Blasform erlaubt dies.

Wäre die Blasform nicht seitlich öffenbar, dann müsste die Kunststoffflasche beispielsweise nach unten oder nach oben herausgefahren werden. Da Kunststoffflaschen in der Regel länglich sind, braucht dies viel Zeit. Außerdem muss der Formboden zur Herstellung der nächsten Kunststoffflasche danach erst wieder nach oben gefahren werden. Das kostet weitere Zeit und verlangsamt die Produktion.

Anders herum ermöglicht es das seitliche Öffnen, die neue Bauchlänge für die nächste Kunststoffflasche bereits während des Entformens der hergestellten Kunststoffflasche oder zumindest bereits während des Einbringens des Preforms für die nächste Kunststoffflasche einzustellen. Bevorzugt ist die Blasform gezielt dazu eingerichtet, die neue Bauchlänge für die nachfolgend in derselben Blasform herzustellenden Kunststoffflasche bereits während des Entformens der zuvor hergestellten Kunststoffflasche und/oder während des Einbringens des Preforms für die nachfolgend herzustellende Kunststoffflasche eingestellt wird.

Zudem ist es aufwendiger, den nächsten Preform in Position zu bringen. Einerseits könnte die Blasform zusätzlich oben öffenbar sein, um den neuen Preform einzubringen. Eine Blasform mit zwei getrennten Öffnungsmechanismen oben und unten ist jedoch teuer und anfälliger. Wenn der nächste Preform von unten eingesetzt wird, so kann dieser Vorgang erst beginnen, wenn die zuvor fertiggestellte Kunststoffflasche gänzlich ausgefahren ist. Das kostet Zeit.

Das seitliche Öffnen vereinfacht es außerdem, die Komponenten für die Verstellung der Bauchlänge und das seitliche Öffnen konstruktiv und funktional zu trennen. Dadurch können diese Komponenten besser auf ihre jeweilige Funktion angepasst werden. Das kommt der Produktionsgeschwindigkeit und Zuverlässigkeit der Blasform zugute.

Außerdem führt das komplette seitliche Öffnen zu einer stärkeren Wärmeabgabe während des Entformens der Kunststoffflasche.

Zum Positionieren des Preforms in der Blasform und/oder zum Entformen der Kunststoffflasche aus der Blasform kann eine Handlingvorrichtung genutzt ausgebildet sein. Die Handlingvorrichtung kann beispielsweise Teil der Blasanlage mit der Blasform sein, insbesondere eines Blasrades der Blasanlage.

Der Innenraum der geschlossenen Blasform umfasst den Mündungsabschnitt und die Kavität. Der Mündungsabschnitt ist zur Aufnahme eines Mündungsbereichs des Preforms (bzw. der daraus hergestellten Kunststoffflasche) ausgebildet. Bevorzugt kann der Mündungsabschnitt dazu eingerichtet, zumindest einen ersten Typ von Mündungsbereichen von Preforms zu halten, wenn die Blasform geschlossen ist. Beispielsweise kann der Mündungsabschnitt eine Neckringaufnahme zur Aufnahme des Neckrings während des Streckblasens aufweisen.

Gemäß einer bevorzugten Weiterbildung kann (für das Streckblasen) zumindest ein Teil der Handlingvorrichtung in dem Mündungsabschnitt positioniert sein. Die Handlingvorrichtung kann beispielsweise dazu eingerichtet sein, den Preform gegen die Neckringaufnahme zu drücken und/oder den Mündungsabschnitt nach außen abzuschließen.

Besonders bevorzugt ist die Blasform dazu eingerichtet, mittels des Mündungsabschnitts den Mündungsbereich eines Preforms (mit dem ersten Typ von Mündungsbereich) fest in dem Innenraum der Blasform zu fixieren, wenn die Blasform geschlossen ist, gegebenenfalls unter Mitwirkung der Handlingvorrichtung. Das gilt insbesondere während des Streckblasens.

In dem Innenraum schließt an den Mündungsabschnitt entlang der Längsrichtung gesehen die Kavität an. Die Kavität ist dazu eingerichtet, dass in ihr beim Herstellen (Streckblasen) der Kunststofflasche der Streckbereich des Preforms verstreckt wird, bis die fertige Gestalt der Kunststoffflasche erreicht ist. Eine Gestalt der Kavität bestimmt also die Gestalt des Flaschenhalses, des Flaschenbauches (sofern vorhanden) und des Flaschenbodens der Kunststoffflasche. Die Länge des Flaschenbauchs der hergestellten Kunststoffflasche ist einstellbar, indem die Bauchlänge eingestellt wird. Bevorzugt ist die Blasform derart einstellbar, dass die Bauchlänge null ist. Dann grenzt Formboden in der Längsrichtung unmittelbar an einen Halsabschnitt der Kavität zur Ausbildung des Flaschenhalses. Das erlaubt die Herstellung von Kunststofflaschen ohne Flaschenbauch, also mit minimalem Volumen.

Die Blasform ist also zumindest dazu eingerichtet, dass aus Preforms mit dem ersten Typ von Mündungsbereich Kunststoffflaschen mit unterschiedlich langem Flaschenbauch hergestellt werden.

Die Preforms können beispielsweise zumindest im Wesentlichen aus Polyethylenterephthalat (PET) bestehen. Entsprechend können die Kunststoffflaschen beispielsweise zumindest im Wesentlichen aus PET bestehen.

In einer Weiterbildung der Erfindung ist die Blasform über die Gesamtlänge des Innenraums quer zu der Längsrichtung in zumindest ein erstes Formteil und ein zweites Formteil unterteilt, wobei das zweite Formteil zum Öffnen und Schließen der Blasform relativ zu dem ersten Formteil
- verschwenkbar ist und/oder
- zumindest im Wesentlichen quer zu der Längsrichtung verfahrbar ist.

Das ermöglicht ein schnelles, einfaches und zuverlässiges Öffnen und Schließen. Zudem ermöglicht es in konstruktiv einfacher Weise, die fertige Kunststoffflasche seitlich zu der Längsrichtung aus der geöffneten Blasform zu entformen.

Die Blasform kann ein Verschlusssystem aufweisen, um die Blasform zu öffnen und zu schließen. Das Verschlusssystem kann ein Verriegelungssystem umfassen, um die Formteile zu verriegeln, wenn die Blasform geschlossen ist. Beim Streckblasen von Kunststoffflaschen aus Preforms werden teilweise hohe Drücke verwendet. Abhängig von der Größe der herzustellenden Kunststofflasche und dem Preform können Drücke bis zu 40 bar aufgebracht werden. Das Verriegelungssystem kann insbesondere einen oder mehrere automatisch betätigte Verschlussstifte umfassen.

Überaus bevorzugt ist die Blasform quer zu der Längsrichtung in genau zwei Formhälften geteilt. Das ermöglicht einerseits ein leichtes seitliches Öffnen der Blasform. Beispielsweise genügt es, nur eine der zwei Formhälften um nur eine Schwenkachse zu verschwenken. Die Blasform kann einfach "aufgeklappt" werden. Jede zusätzliche weitere Unterteilung der Blasform quer zu der Längsrichtung kann eine zusätzliche mechanische Schwachstelle darstellen und erhöht tendenziell die Komplexität und Anfälligkeit des Verschluss- und Verriegelungssystems.

Bevorzugt ist die Blasform so eingerichtet, dass die Längsrichtung einer Richtung der Schwerkraft entspricht. Die Schwerkraft unterstützt die Komponente der Verstreckung entlang der Längsrichtung. Zudem kann die Flasche nach der Fertigstellung mit dem Flaschenboden auf dem Formboden stehen, sobald sie eine ausreichende mechanische Stabilität erreicht hat.

Gemäß einem weiteren Aspekt weist die Blasform mindestens einen Temperierkanal auf. Der mindestens eine Temperierkanal kann dazu eingerichtet sein, die Blasform vorzuheizen und/oder eine Temperatur der Blasform in einem Toleranzbereich zu halten. Üblicherweise werden die Preforms vorgeheizt, bevor sie in der Blasform eingeschlossen und darin verstreckt werden. Folglich wird der Blasform durch die Preforms Wärme zugeführt. Beim Anlaufen der Produktion würde es aufgrund der kleinen Wärmekapazität der Preforms und der hohen Wärmekapazität der Blasform möglicherweise lange dauern, bis sich ein für die Herstellung der Kunststofflaschen geeignetes Temperaturprofil der Blasform eingestellt hat. Die Innenwand der Kavität sollte während des Streckblasens eine gewisse Mindesttemperatur haben. Ansonsten kann es an zur Ausbildung ungleicher Wandstärken der Kunststoffflaschen kommen. Andererseits kann es erwünscht sein, die Blasform im laufenden Produktionsbetrieb aktiv zu kühlen. Bei hohen Produktionsleistungen kann die Innenwand der Kavität durch die von den Preforms eingebrachte Wärme zu heiß werden. Dadurch erkaltet die Kunststoffflasche nicht rechtzeitig, nachdem sie vollständig aufgeblasen ist und ihr Material an der Innenraumwand der Blasform anliegt. Die Kunststoffflasche wird nicht rechtzeitig mechanisch stabil genug, um sie unbeschadet zu entformen und weiter zu transportieren. Durch eine Kühlung der Blasform wird der Kunststoff rechtzeitig unter die Glasübergangstemperatur gebracht und die Kunststoffflasche ist beim Entformen und Weitertransport ausreichend abgekühlt und stabil.

Für die Heißabfüllung von bestimmten Getränken sind PET-Flaschen mit einer zusätzlichen thermischen Kristallinität besonders geeignet. Manche Fruchtsäfte werden beispielsweise mit einer Temperatur 95 °C abgefüllt. Derartige PET-Flaschen verformen sich beim Heißabfüllen weniger als übliche PET-Flaschen. Zu Erreichung der zusätzlichen thermischen Kristallinität muss das PET im Streckblasprozess etwas höheren Temperaturen ausgesetzt werden und nach dem Aufblasen schneller heruntergekühlt werden. Mithilfe des mindestens einen Temperierkanals kann die Blasform dies erleichtern.

Überaus bevorzugt ist die Blasform dazu eingerichtet, eine Menge und/oder eine Temperatur eines durch den mindestens einen Temperierkanal strömenden Fluids zu steuern. Die Blasform kann hierzu in dem mindestens einen Temperierkanal selbst und/ oder in einer oder mehreren Zu- und/oder Ableitungen des Temperierkanals Ventile aufweisen.

Besonders bevorzugt umfasst die Blasform mehrere Temperierkanäle. Es kann vorgesehen sein, dass die Temperierkanäle zumindest teilweise unabhängig voneinander steuerbar sind.

In einer vorteilhaften Ausführungsform ist die Blasform zur Kühlung des Mündungsabschnitts eingerichtet. Beispielsweise kann der mindestens eine Temperierkanal oder einer von mehrerer Temperierkanälen dazu eingerichtet sein. Während des Streckblasens soll sich der Mündungsbereich des Preforms nicht verformen. Durch die Kühlung des Mündungsabschnitts wird der beim Streckblasen darin aufgenommene Mündungsbereich schneller kühler und schneller mechanisch stabiler. Das verringert die Gefahr und gegebenenfalls das Ausmaß einer unerwünschten Verformung des Mündungsbereichs.

In einer vorteilhaften Ausführungsform weist die Blasform eine Innenform auf, welche die Kavität der Blasform zumindest in einem Teilbereich definiert, wenn die Blasform geschlossen ist.

Die Innenform kann aus einem anderen Material gefertigt sein als eine äußere Form. Die Innenform kann beispielweise aus Aluminium hergestellt sein. Aluminium bietet eine gute Wärmeleitung und beschleunigt dadurch das Abkühlen der aufgeblasenen Kunststofflasche. Dadurch wird die Produktionszeit gesteigert. Außerdem ist Aluminium günstig und einfach zu verarbeiten, beispielsweise in komplexere Formen zu gießen. Das erleichtert die Herstellung aufwendiger Innenraumwände zur Herstellung besonders dekorativer Kunststofffaschen. Zudem ist Aluminium vergleichsweise leicht und erleichtert so ein schnelles Öffnen der Blasform.

Besonders bevorzugt ist die Blasform dazu eingerichtet, dass die Innenform beim Streckblasen auf ihre Innenraumwand wirkenden Druckkräfte gänzlich oder zumindest teilweise auf einen äußeren Bereich der Blasform überträgt. Es kann beispielsweise vorgesehen sein, dass verschiedene Teile der Innenform in der Umfangsrichtung für den Streckblas-Prozess nicht starr aneinander verriegelt werden. Die Innenform übertragt so während des Streckblasens im Wesentlichen lediglich Druckkräfte auf die äußere Form und wird in der Umfangsrichtung und/ oder in der Längsrichtung nicht auf Zug belastet. Deshalb genügt ein vergleichsweise weniger zugfestes Material wie Aluminium für die Innenform.

Gemäß einem anderen besonders bevorzugten Aspekt umfasst die Innenform mehrere Teile. "Mehrere" bedeutet im Sinne dieser Offenbarung "mindestens" zwei. Insbesondere kann die Innenform quer zu der Längsrichtung in mindestens zwei Teile unterteilt sein. Das macht es möglich, dass einerseits die Innenform den Innenraum zumindest in einem Teilabschnitt entlang der Längsrichtung über den kompletten Umfang definiert und dass andererseits die Blasform über eine Gesamtlänge des Innenraums in der Längsrichtung seitlich öffenbar ist.

Überaus bevorzugt ist die Innenform quer zur Längsrichtung in genau zwei Innenform-Hälften geteilt, beispielsweise entsprechend zweier Hälften der Blasform.

Das ermöglicht einerseits ein leichtes seitliches Öffnen und andererseits eine minimale Anzahl von Stoßkanten an der Innenraumwand der Blasform. Letzteres sorgt für eine optisch ansprechende Gestaltung der hergestellten Kunststoffflasche. Jede zusätzliche Stoßkante der Innenform erhöht das Risiko für die Ausbildung unerwünschter Abdrücke in den Wänden der Kunststoffflaschen.

Bevorzugt ist zumindest ein Teil der Innenform austauschbar. Insbesondere kann die gesamte Innenform bzw. können alle Teile der Innenform austauschbar sein. Das ermöglicht es, die Gestalt des Innenraums und damit die Gestalt der herzustellenden Kunststoffflaschen schnell, einfach und zuverlässig zu verändern. Die Flexibilität der Blasform ist erhöht. Auf spezielle Kundenwünsche bezüglich der Gestalt der Kunststoffflaschen kann schnell und kostengünstig reagiert werden.

In einer Weiterbildung ist die mindestens eine Blasform zur austauschbaren Aufnahme von Innenformen eingerichtet ist, sowie mit einer ersten Innenform und mindestens einer weiteren Innenform, wobei die Blasform bei Anwendung der ersten Innenform für das Streckblasen von Kunststoffflaschen mit unterschiedlichen Volumina mit einer ersten Gestaltung eingerichtet ist und bei Anwendung der zweiten Innenform für das Streckblasen von Kunststoffflaschen mit unterschiedlichen Volumina einer zweiten Gestaltung eingerichtet ist, wobei sich die zweite Gestaltung von der ersten Gestaltung unterscheidet. Entsprechend weist die Innenwand der ersten Innenform eine erste Gestaltung auf und die Innenwand der zweiten Innenform weist eine davon abweichende, zweite Gestaltung auf.

Wenn die Innenform aus vergleichsweise weichem Material besteht und/oder ihre Innenraumwand komplex geformt wird, kann sie eher verschleißen und oder beschädigt werden. Auch deshalb ist es von Vorteil, wenn die Innenform (oder zumindest ein Teil davon) austauschbar ist.

Besonders bevorzugt definiert die Innenform zumindest die Gestalt des Flaschenhalses der Kunststoffflasche. Anders gesagt definiert die Innenform zumindest den Halsabschnitt. Der Flaschenhals kann besonders frei gestaltet werden. Für die Gestaltung von Flaschenhälsen werden verschiedenste Grundformen und/oder Ornamente verwendet. Also Ornamente kommen unter anderem Marken und Firmenkennzeichen infrage. Zudem kommt dem Flaschenhals eine besondere Aufmerksamkeit der Endkunden zugute. So ist der Flaschenhals auch dann gut sichtbar, wenn die Kunststoffflasche in einer Getränkekiste steht. Die vorliegende Weiterbildung erlaubt deshalb eine einfache und kostengünstige Individualisierung der Kunststoffflaschen bei gleichzeitig großem Gestaltungsspielraum und hoher Auffälligkeit der Gestaltung.

Alternativ oder zusätzlich definiert die Innenform besonders bevorzugt zumindest die Gestalt eines Teilabschnitts des Flaschenbauchs der Kunststoffflasche. Die zuvor genannten Vorteile gelten entsprechend. Wenn es möglich sein soll, dass die Bauchlänge für die mit dieser Innenform herzustellenden Flaschen null werden kann, ist der Gestaltungsspielraum den Teilabschnitt für den Flaschenbauch freilich begrenzt. Wenn die Bauchlänge nicht null werden muss, so ist ein mündungsnaher Bereich des Teilabschnitts für den Flaschenbauch aber sehr frei gestaltbar. Insbesondere kann die Innenform einen gesamten Bauchabschnitt der Kavität definierten.

Alternativ oder zusätzlich ist die Blasform bevorzugt derart eingerichtet, dass der Mündungsabschnitt der Blasform austauschbar ist. Dadurch ist es möglich, dieselbe Blasform für Preforms mit unterschiedlichen Typen von Mündungsabschnitten zu verwenden.

Bevorzugt ist der Formboden quer zu der Längsrichtung gesehen in einen ersten Abschnitt und einen zweiten Abschnitt unterteilt, wobei der erste Abschnitt relativ zu dem zweiten Abschnitt entlang der Längsrichtung verfahrbar ist. Insbesondere kann der erste Abschnitt als Zentralabschnitt ausgebildet sein und der zweite Abschnitt kann als Außenabschnitt ausgebildet sein. In einer Projektion entlang der Längsrichtung kann der Zentralabschnitt beispielsweise eine zumindest im Wesentlichen kreisförmige Grundgestalt haben und der ihn umgebende Außenabschnitt eine zumindest im Wesentlichen kreisringförmige Grundgestalt. Im Allgemeinen müssen der erste Abschnitt und der zweite Abschnitt aber nicht konzentrisch sein. Besonders bevorzugt definiert ein Abstand zwischen dem zweiten Abschnitt und dem Halsabschnitt die Bauchlänge.

Häufig weisen Kunststoffflaschen einen Flaschenboden mit einer Einwölbung auf, beispielsweise mit einer zentralen Einwölbung. Entsprechend weist der Formboden zur Ausbildung des Flaschenbodens in dem ersten Abschnitt, der insbesondere als Zentralabschnitt ausgeführt sein kann, eine Auswölbung auf, die in der Längsrichtung in die Kavität der Blasform vorragt. Diese Auswölbung dient dazu, beim Streckblasen die Einwölbung des Flaschenbodens auszubilden. Nach dem Streckblasen der Kunststoffflasche erschwert die Auswölbung des Flaschenbodens das seitliche Entformen der Kunststofflasche, da die Auswölbung weiterhin formschlüssig in die Einwölbung des Flaschenbodens der hergestellten Kunststofflasche eingreift. Mit der vorliegenden Ausführungsform ist die Blasform dazu eingerichtet, den ersten Abschnitt des Formbodens relativ zu dem zweiten Abschnitt, der insbesondere als Außenabschnitt ausgebildet sein kann, entlang der Längsrichtung von der Kunststofflasche weg zu verfahren (mit anderen Worten weg von dem Mündungsabschnitt der Blasform).

Insbesondere kann der erste Abschnitt relativ zu dem zweiten Abschnitt in der Längsrichtung soweit aus der Kavität herausgefahren werden, dass der erste Abschnitt das seitliche Entformen der Kunststoffflasche nicht mehr behindert. Da der erste Abschnitt relativ zu dem zweiten Abschnitt verfahrbar ist, muss der zweite Abschnitt dabei nicht verfahren werden. Die Bauchlänge ändert sich nicht. Die Flasche wird, wenn sie auf dem Flaschenboden steht, also weiterhin von dem zweiten Abschnitt in der gleichen Position in der Längsrichtung gehalten. Für die relative Verstellung zwischen dem ersten Abschnitt und dem zweiten Abschnitt können beispielsweise ein elektrischer Motor und/oder ein pneumatischer Antrieb vorgesehen sein.

Für das Steckblasen wird der erste Abschnitt relativ zu dem zweiten Abschnitt so verfahren, dass er bezüglich des Innenraums bündig in den zweiten Abschnitt eingebettet ist.

Alternativ oder zusätzlich kann die Blasform dazu eingerichtet sein, den Flaschenboden für das Entformen der Kunststoffflaschen entlang der Längsrichtung soweit von dem Mündungsabschnitt wegzubewegen, dass die Auswölbung des Formbodens das seitliche Entformen der Kunststoffflasche nicht mehr behindert. Das ist vorteilhaft, wenn der Flaschenboden nicht unterteilt ist. Es ist aber auch im Falle des unterteilten Flaschenbodens dann vorteilhaft, wenn der Mündungsbereich der Kunststoffflasche aufgrund seiner Geometrie ein Absenken der Kunststoffflasche beim Öffnen der Blasform verhindert.

Gemäß einem anderen Aspekt weist die Blasform bevorzugt eine Seitenwand auf, die im geschlossenen Zustand der Blasform die Kavität in einem Bauchabschnitt zur Ausbildung des Flaschenbauchs in der Radialrichtung (also quer zu der Längsrichtung) umgrenzt (sofern die Bauchlänge größer null ist), wobei zum Verstellen der Bauchlänge
- der Formboden (entlang der Längsrichtung) relativ zu der Seitenwand verfahrbar ist und/oder
- ein oberer Abschnitt der Blasform (entlang der Längsrichtung) relativ zu der Seitenwand verfahrbar ist.

Der obere Abschnitt umfasst den Mündungsabschnitt und den Halsabschnitt.

Die hergestellten Flaschen haben entlang ihrer jeweiligen Bauchlänge einen gleichbleibenden Querschnitt.

Falls der Formboden einen ersten Abschnitt und einen zweiten Abschnitt aufweist, können diese gemeinsam entlang der Längsrichtung verfahren werden, um die Bauchlänge zu verstellen.

Wenn die Blasform eine Innenform aufweist, kann die Seitenwand teilweise oder komplett durch die Innenform gebildet werden.

Wenn die Innenform austauschbar ist, ist in einer vorteilhaften Weiterbildung auch der Formboden austauschbar. Dann können Seitenwände und Formböden mit unterschiedlichen, jeweils aufeinander abgestimmten Durchmessern quer zu der Längsrichtung verwendet werden.

Falls der Formboden relativ zu der Seitenwand der Blasform verfahrbar ist, kann zwischen der Seitenwand der Blasform und dem Formboden eine Schutzschicht ausgebildet sein. Die Schutzschicht kann beispielsweise an dem Formboden an einer Kontaktfläche des Formbodens mit der Seitenwand vorgesehen sein und/oder an einer Fläche der Seitenwand vorgesehen sein, die mit dem Formboden in Kontakt kommen können. Die Schutzschicht kann jeweils Kunststoff mit guten Gleiteigenschaften umfassen (insbesondere daraus bestehen). Besonders bevorzugt umfasst die Schutzschicht aus eine Hartmetallschicht oder besteht daraus. Die Schutzschicht vermindert eine Reibung und/oder einen Verschleiß aufgrund der relativen Bewegung zwischen der Seitenwand und dem Formboden.

Falls der obere Abschnitt relativ zu der Seitenwand der Blasform verfahrbar ist, kann zwischen der Seitenwand und dem oberen Abschnitt eine Schutzschicht ausgebildet sein. Die Schutzschicht kann beispielsweise an dem oberen Abschnitt an einer Kontaktfläche des oberen Abschnitts mit der Seitenwand sein und/oder an einer Fläche der Seitenwand vorgesehen sein, die mit dem oberen Abschnitt in Kontakt kommen kann. Zu bevorzugten möglichen Ausführungen und den Vorteilen gilt das zuvor gesagte entsprechend.

Die mindestens eine Blasform ist dazu eingerichtet, die Bauchlänge automatisch einzustellen. Beispielsweise kann der Formboden relativ zu der Seitenwand der Blasform automatisch verfahrbar sein und/oder der Kopfbereich kann relativ zu der Seitenwand der Blasform automatisch verfahrbar sein. Das erlaubt ein schnelles, automatisiertes Verstellen der Bauchlänge bzw. Einstellen der gewünschten Bauchlänge.

Bevorzugt ist eine Längsverstellung für den Formboden vorgesehen, die dazu eingerichtet ist, den Formboden an verschiedenen Positionen entlang der Längsrichtung zu verfahren und dort jeweils zu halten.

Die Längsverstellung kann einen Linearantrieb umfassen. Er ermöglicht die kontrollierte, automatische Verstellung der Bauchlänge.

Die Längsverstellung kann beispielsweise eine Steilgewindespindel umfassen. Die Steilgewindespindel ermöglicht eine hohe Verfahrgeschwindigkeit bei niedriger Drehzahl. Die hohe Verfahrgeschwindigkeit ermöglicht es, die Bauchlänge sehr schnell zu verstellen. Als Folge davon wird die Produktionskapazität der Blasform nicht beeinträchtigt, wenn die Bauchlänge im Mischbetrieb häufig verändert werden muss. In einer Weiterbildung umfasst die Längsverstellung einen Schrittmotor zum Antrieb der Steilgewindespindel.

Alternativ oder zusätzlich umfasst die Längsverstellung für den Formboden besonders einen Servomotor. Der Servomotor ermöglicht auf einfache Weise eine zuverlässige und exakte Einstellung der Bauchlänge. Insbesondere kann der Servomotor zum Antrieb der Steilgewindespindel eingerichtet sein.

Alternativ oder zusätzlich umfasst die Längsverstellung für den Formboden einen hydraulischen Zylinder und/oder einen pneumatischen Zylinder. Der hydraulische Zylinder ermöglicht es, hohe Kräfte mit großer Genauigkeit aufzubringen. Der pneumatische Zylinder ist besonders kostengünstig, zuverlässig und erlaubt eine schnelle Längenverstellung. Beide Zylinderarten haben jeweils den Vorteil, dass eine zentrale Druckquelle für mehrere Blasformen ausreichend sein kann.

Gemäß einem besonders bevorzugten Aspekt ist die Längsverstellung dazu eingerichtet, den Formboden zwischen einer minimalen Position für eine minimale Bauchlänge (die null sein kann) und einer maximalen Position für eine maximale Bauchlänge jeweils innerhalb von weniger als 0,5 s verstellen, überaus bevorzugt in weniger als 0,2 s.

Alternativ oder zusätzlich beträgt ein Verfahrweg zwischen der minimalen Position und der maximalen Position besonders bevorzugt mindestens 4 cm, überaus bevorzugt mindestens 6 cm, außerordentlich bevorzugt mindestens 8 cm.

In einer besonders bevorzugten Ausführungsform umfasst die Längsverstellung für den Formboden ein Messsystem zur Kontrolle der Position des Formbodens entlang der Längsrichtung.

Überaus bevorzugt umfasst das Messsystem einen Encoder. Damit können die Position und/oder die Positionsänderung des Formbodens gemessen werden. Dies hilft, die korrekte Einstellung bzw. das korrekte Verstellen des Formbodens sicherzustellen. Das Messsystem kann alternativ oder zusätzlich eine oder mehrere Hall-Sensoren aufweisen.

Gemäß einem weiteren Aspekt umfasst das Messsystem vorteilhafterweise mindestens einen Endschalter. Mittels des mindestens einen Endschalters kann eine Endposition des Formbodens entlang der Längsrichtung bestätigt werden. Damit kann überwacht werden, ob sich der Formboden korrekt bewegt.

Gemäß einem weiteren Aspekt weist die Längsverstellung für den Formboden eine Bremse auf. Die Bremse kann beispielsweise an dem Servomotor vorgesehen sein. Die Bremse hält den Formboden in der eingestellten Position. Beim Streckblasen werden große Kräfte auf den Formboden aufgebracht. Die Bremse nimmt zumindest einen Teil dieser Kräfte oder die kompletten Kräfte auf. Auf diese Weise wird der Antrieb der Längsverstellung beim Streckblasen weniger belastet. Zudem ist die Gefahr geringer, dass die Position des Formbodens während des Streckblasens unbeabsichtigt verändert wird. Zudem hilft die Bremse beim schnellen und präzisen Abbremsen des Formbodens beim Verstellen.

Alternativ oder zusätzlich kann die Längsverstellung mehrere mechanische Rastpositionen aufweisen. Die unterschiedlichen Rastpositionen entsprechen unterschiedlichen Bauchlängen. Insbesondere können mindestens zwei, überaus bevorzugt mindestens drei unterschiedliche Rastpositionen vorgesehen sein. Alternativ oder zusätzlich kann die Längsverstellung Verriegelungen zur Fixierung mehrerer Positionen des Formbodens aufweisen. Die Vorteile bezüglich der Bremse gelten entsprechend.

Falls die Längsverstellung für den oberen Abschnitt vorgesehen ist, sind die bezüglich der Längsverstellung für den Formboden beschriebenen Ausführungsformen und Vorteile entsprechend anwendbar.

In einer Weiterbildung der Erfindung ist die Blasform über die Gesamtlänge des Innenraums in der Längsrichtung seitlich öffenbar, ohne dass dafür die Bauchlänge der Kavität verändert werden muss. Mit anderen Worten ist es für das seitliche Öffnen weder notwendig, den Formboden (genauer: die zweite Hälfte des Formbodens) entlang der Längsrichtung relativ zu der Seitenwand zu verfahren, noch notwendig, den oberen Abschnitt der Blasform entlang der Längsrichtung relativ zu der Seitenwand zu verfahren.

Besonders bevorzugt ist die Blasform dazu eingerichtet, dass die (jeweilige) in der Blasform hergestellte Kunststoffflasche aus der Blasform entformbar ist, ohne dass die Bauchlänge der Kavität zu verändern. Mit anderen Worten ist es für das Entformen weder notwendig, den Formboden (genauer die zweite Hälfte des Formbodens) entlang der Längsrichtung relativ zu der Seitenwand zu verfahren, noch notwendig, den oberen Abschnitt der Blasform entlang der Längsrichtung relativ zu der Seitenwand zu verfahren. Die Blasform öffnet lediglich seitlich zum seitlichen Entformen der (jeweils) fertiggestellten Kunststoffflasche. Zudem kann der erste Abschnitt des Formbodens relativ zu dem zweiten Abschnitt des Formbodens verfahren werden (bevorzugt entlang der Längsrichtung weg von dem oberen Abschnitt der Blasform), um das Entformen zu erleichtern. Wenn zwei Kunststoffflaschen mit gleicher Bauchlänge nacheinander hergestellt werden sollen, bleibt beispielsweise die Position des Formbodens (genauer des zweiten Abschnitts des Formbodens) entlang der Längsrichtung relativ zu der Seitenwand während des gesamten Entformvorgangs stationär. Das beschleunigt die Herstellung, verringert den Energieverbrauch und den Verschleiß, insbesondere wenn mindestens zwei Kunststoffflaschen mit gleicher Bauchlänge hintereinander hergestellt werden. Natürlich kann auch der zweite Abschnitt des Formbodens und/oder der obere Abschnitt der Blasform bereits während des Entformens (siehe oben, insbesondere, wenn die Bauchlänge für die folgende Kunststoffflasche größer ist) und/oder nach dem Entformen verfahren werden, um eine geänderte Bauchlänge einzustellen.

In einer Weiterbildung der Erfindung ist Bauchlänge der Kavität in dem geschlossenen Zustand der Blasform verstellbar. Das ermöglicht eine schnellere Produktion und eine größere zeitliche Flexibilität für das Verstellen der Bauchlänge. Beispielsweise kann die Bauchlänge noch verstellt werden, während ein Streckdorn einen Preform in der geschlossenen Blasform vor dem Aufblasen und/oder während des Aufblasens entlang der Längsrichtung in die Länge zieht. Das spart Zeit.

Gemäß einem weiteren Aspekt ist bevorzugt, dass die Seitenwand der Blasform schraubenförmige Rillen aufweist und dass der Formboden, wenn er entlang der Längsrichtung verstellt wird, schraubenförmig entlang der Rillen bewegt wird. Ein äußerer Umfang des Formbodens kann der Gestalt der Seitenwand angepasst sein und insbesondere in die Rillen eingreifen. Entsprechen weisen die fertigen Kunststoffflaschen entlang ihrer Bauchlängen schraubenförmige Auswölbungen und Vertiefungen auf. Damit lassen sich besondere dekorative Effekte erzielen. Ein äußerer Umfang des Formbodens kann beispielsweise zahnradartig ausgebildet sein, wobei die Zähne in die Rillen eingreifen.

Gemäß einem anderen Aspekt weist die Seitenwand der Blasform bevorzugt mindestens eine Rille, die sich entlang der Längsrichtung erstreckt, und/oder mindestens eine Auswölbung, die sich entlang der Längsrichtung erstreckt, auf und der Formboden rotiert nicht um die Längsrichtung, wenn er entlang der Längsrichtung verstellt wird. Der Formboden kann beispielsweise drehbar aber axial fest an der Steilgewindespindel angebracht sein. Der äußere Umfang des Formbodens kann der Gestalt der Seitenwand angepasst ist und insbesondere in die mindestens eine Rille eingreifen und/oder die mindestens eine Auswölbung eingreifen lassen. Die mindestens eine Rille und/oder mindestens eine Auswölbung führen zu einer entsprechenden Gestalt der hergestellten Kunststoffflaschen entlang deren Bauchlänge. Dadurch werden die Flaschen dekorativer. Zudem können Rillen und/oder Stege an dem Flaschenbauch der Kunststoffflasche eine mechanische Stabilität der Kunststoffflaschen verbessern.

Bevorzugt ist die Blasform dazu eingerichtet, unmittelbar nacheinander Kunststoffflaschen mit den mindestens zwei (bzw. mindestens drei) verschiedenen Füllvollvolumina herstellen, ohne dass die Innenform, ein Teil der Innenform und/oder der Mündungsabschnitt dazwischen getauscht werden muss bzw. müssen.

Bevorzugt ist die Blasform dazu eingerichtet, durch Verstellen der Bauchlänge unterschiedliche Kunststoffflaschen mit mindestens zwei, besonders bevorzugt mindestens drei, verschiedenen Füllvolumina herzustellen, wobei die unterschiedlichen Füllvolumina jeweils im Bereich von einschließlich 0,2 l bis einschließlich 0,75 l liegen. Zum Beispiel können die mindestens zwei (bzw. mindestens drei) unterschiedlichen Füllvolumina aus der folgenden Aufzählung ausgewählt sein: 0,2 l; 0,3 l; 0,33 l; 0,4 l; 0,5 l; 0,55 l; 0,7 l; 0,75 l. Es können für alle der aufgeführten Flaschengrößen Preforms mit Mündungsbereich desselben Typs verwendet werden, beispielsweise jeweils mit einem Verschlussgewinde PCO 28 mm. Es ist jedoch vorteilhaft, wenn der Streckbereich der Preforms jeweils an die Bauchlänge der herzustellenden Kunststoffflasche angepasst ist. Das wird weiter unten erläutert.

Alternativ oder zusätzlich ist ein Durchmesser des Innenraums der geschlossenen Blasform quer zu der Längsrichtung im Bereich der Seitenwand (ggf. im Bereich der Bauchlänge) besonders bevorzugt im Bereich von 55 mm bis 75 mm, überaus vorteilhaft im Bereich von 60 mm bis 70 mm, insbesondere 65 mm. Das ermöglicht ein adäquates Streckverhältnis und die Kunststofflaschen passen in gängige Getränkekisten.

In einer anderen, besonders bevorzugten Ausführungsform ist die Blasform dazu eingerichtet, durch Verstellen der Bauchlänge unterschiedliche Kunststoffflaschen mit mindestens zwei, besonders bevorzugt mindestens drei, verschiedenen Füllvolumen herzustellen, wobei die unterschiedlichen Füllvolumina jeweils im Bereich von einschließlich 0,7 l bis einschließlich 2,0 l liegen. Zum Beispiel können die mindestens zwei (bzw. mindestens drei) unterschiedlichen Füllvolumina aus der folgenden Aufzählung ausgewählt sein: 0,7 l; 0,75 l; 1,0 l; 1,33 l; 1,5 l; 1,75 l; 2,0 l. Es können für alle der aufgeführten Flaschengrößen Preforms mit Mündungsbereich desselben Typs verwendet werden, beispielsweise jeweils mit einem Verschlussgewinde von 38 mm. Es ist vorteilhaft, wenn der Streckbereich der Preforms jeweils an die Bauchlänge der herzustellenden Kunststoffflasche angepasst ist. Das wird weiter unten erläutert.

Alternativ oder zusätzlich ist ein Durchmesser des Innenraums der geschlossenen Blasform quer zu der Längsrichtung im Bereich der Seitenwand (ggf. im Bereich der Bauchlänge) besonders bevorzugt im Bereich von 85 mm bis 105 mm, überaus vorteilhaft im Bereich von 90 mm bis 100 mm, insbesondere 95 mm. Das ermöglicht ein adäquates Streckverhältnis und die Kunststofflaschen passen in gängige Getränkekisten.

Im Allgemeinen ist die Blasform nicht auf die Herstellung von Kunststoffflaschen mit einem kreisförmigen Durchmesser, insbesondere im Bereich der Bauchlänge, begrenzt. Die Blasform kann beispielsweise zur Herstellung von Kunststoffflaschen unterschiedlicher Längen mit ovalem Querschnitt eingerichtet sein.

Wie zuvor erwähnt umfasst die erfindungsgemäße Blasanlage zur Herstellung von Kunststoffflaschen durch Streckblasen mindestens eine offenbarungsgemäße Blasform umfasst.

Der Begriff "offenbarungsgemäße Blasform" bezeichnet eine Blasform gemäß einer beliebigen der zuvor beschriebenen Ausführungsformen.

Die Blasanlage kann eingerichtet sein zum:
- Einbringen eines Preforms für die jeweilige Kunststofflasche in die mindestens eine offenbarungsgemäße Blasform und zum Schließen der Blasform;
- Einstellen der Bauchlänge der Kavität in der Längsrichtung zwischen dem Halsabschnitt der Kavität zur Ausbildung des Flaschenhalses und dem Formboden zum Einstellen des Volumens der jeweils herzustellenden Kunststoffflasche;
- Streckblasen der jeweiligen Kunststoffflasche in der Blasform; und
- Öffnen der Blasform und Entformen der Kunststoffflasche seitlich zu der Längsrichtung.

In einer vorteilhaften Ausführungsform ist die Blasanlage dazu eingerichtet, der mindestens einen Blasform (d.h. derselben Blasform) im Mischbetrieb nacheinander selektiv Preforms mehrerer unterschiedlicher Preformtypen zuzuführen. Insbesondere kann die Blasanlage für mehrere unterschiedliche Preformtypen jeweils mindestens ein Vorratssilo und ein Entnahmesystem für die Vorratssilos aufweisen, wobei das Entnahmesystem dazu eingerichtet ist, die Preforms der unterschiedlichen Preformtypen selektiv in Abhängigkeit von den Volumina der herzustellenden Kunststoffflaschen zu entnehmen. Das Entnahmesystem kann insbesondere dazu geeignet sein, Preforms der unterschiedlichen Preformtypen in beliebig bestimmbarer Reihenfolge im Mischbetrieb bereitzustellen. Die derart bereitgestellten Preforms können beispielsweise einem Ofen zugeführt werden. Vorzugsweise ändert sich die Reihenfolge der vom Entnahmesystem bereitgestellten Preforms in dem Ofen nicht. Bei dem Ofen kann es sich insbesondere um einen gemeinsamen Ofen für mehrere Blasräder handeln, wie er weiter unten beschrieben wird.

Das Entnahmesystem ermöglicht die bedarfsgerechte Versorgung der Blasanlage und insbesondere der Blasform(en) mit Preforms der unterschiedlichen Preformtypen. Die Vorteile der Verwendung unterschiedlicher Preformtypen sind im Detail im Zusammenhang mit dem Verfahren beschreiben. Die Ausführungsformen und Vorteile gelten entsprechend.

Die Blasanlage ist dazu eingerichtet, einen Gesamthub eines Streckdorns für das Streckblasen der jeweiligen Kunststoffflasche in der mindestens einen Blasform automatisch in Abhängigkeit von der Bauchlänge einzustellen. Die Einstellung des Gesamthubs kann mittelbar oder unmittelbar von dem für die jeweilige Kunststoffflasche verwendeten Preformtyp abhängen.

Bevorzugt umfasst die Blasanlage mindestens ein erstes Blasrad, wobei dieses erste Blasrad mindestens eine offenbarungsgemäße Blasform umfasst.

Blasräder können als kontinuierlich arbeitende Maschinen betrieben werden und eigenen sich gut für die Massenproduktion.

In einer besonders bevorzugten Weiterbildung weist das erste Blasrad mehrere Blasformen auf. Es können mehrere Blasformen des ersten Blasrades als offenbarungsgemäße Blasformen ausgeführt sein. Die Modifikationen und Vorteile gelten entsprechend. Insbesondere können alle Blasformen des ersten Blasrades als offenbarungsgemäße Blasformen ausgeführt sein.

Jede der Blasformen des ersten Blasrades kann jeweils als offenbarungsgemäße Blasform ausgebildet sein, und zwar unabhängig von der Ausführungsform gegebenenfalls vorhandener anderer Blasformen des ersten Blasrades. Außerordentlich bevorzugt sind aber alle Blasformen des ersten Blasrades gleich ausgeführt.

Von modernen Abfüllanlagen für die Massenproduktion von Kunststoffflaschen für Getränke werden Produktionsleistungen von mehr als 12.000 Flaschen pro Stunde erwartet. Eine Blasanlage mit einem kontinuierlich arbeitenden Blasrad und mehreren Blasformen ermöglicht solche hohen Produktionszahlen auf vergleichsweise kleinem Raum, unter verhältnismäßig geringen Kosten sowie mit hoher Zuverlässigkeit. Übliche Taktmaschinen erreichen dagegen typischerweise nur Produktionsleistungen von etwa 6.000 Flaschen pro Stunde bis 7.000 Flaschen pro Stunde.

In einer Weiterbildung der Erfindung weist die Blasanlage (beispielsweise das Blasrad) mehrere offenbarungsgemäße Blasformen auf. Besonders bevorzugt ist die Blasanlage dazu eingerichtet, jeder dieser (offenbarungsgemäßen) Blasformen im Mischbetrieb nacheinander jeweils selektiv Preforms mehrerer unterschiedlicher Preformtypen zuzuführen.

In einer Weiterbildung der Erfindung umfasst die Blasanlage zusätzlich mindestens ein zweites Blasrad sowie einen Ofen zum Vorwärmen von Preforms vor dem Streckblasen, wobei die Blasanlage eine Verteilvorrichtung zur Zuführung vorgewärmter Preforms aus dem gemeinsamen Ofen zu dem ersten Blasrad und dem zweiten Blasrad umfasst.

Das erste und das zweite Blasrad werden also beide mit erwärmten Preforms aus dem ersten Ofen bestückt. Durch die Verteilvorrichtung kann der gemeinsame Ofen von beiden Blasrädern gemeinsam genutzt werden. Damit lässt sich die Produktion schneller anpassen. Wenn beispielsweise zunächst nur das erste Blasrad genutzt wird und dann das zweite Blasrad zusätzlich genutzt werden soll, muss nicht erst ein separater Ofen für das zweite Blasrad vorgeheizt werden. Das würde Zeit und zusätzliche Energie kosten. Zudem benötigt ein größerer, gemeinsamer Ofen im Vergleich zu mehreren, separaten Öfen insgesamt weniger Investitionskosten und weniger Platz.

Noch dazu lassen sich vorgeheizte Preforms nicht beliebig lange lagern. Durch das Aufheizen hat der Kunststoff das zum Streckblasen erforderliche, ausgeprägt viskoelastische Materialverhalten. Wenn beispielsweise für das erste Blasrad und das zweite Blasrad jeweils ein eigener Ofen vorgesehen wäre und das erste Blasrad gerade nichts herzustellen hätte, müssten die darin bereits vorgeheizten Preforms für das Preform zunächst auf Temperatur gehalten werden. Durch die hohe Temperatur würden sich ihre Materialeigenschaften jedoch mit der Zeit ändern. Noch dazu würden sie sich aufgrund des Fließverhaltens des erhitzten Kunststoffes mit der Zeit verziehen. Länger warmgehaltene Preforms könnten nicht mehr zur Herstellung qualitativ hochwertiger Kunststoffflaschen genutzt werden und wären Ausschuss.

In einer äußerst bevorzugten Weiterbildung ist die Verteilvorrichtung dazu eingerichtet, die vorgewärmten Preforms selektiv in beliebig bestimmbarer Reihenfolge auf das erste Blasrad und/oder das zweite Blasrad zu verteilen. Selektiv bedeutet in diesem Sinne, dass für jedes vorgewärmte Preform individuell und gesondert bestimmt werden kann, ob es dem ersten Blasrad oder dem zweiten Blasrad zugeführt wird. Das ist insbesondere dann von Vorteil, wenn unterschiedliche Preformtypen verwendet werden und/oder wenn das erste Blasrad und das zweite Blasrad unterschiedliche Blasformen aufweisen.

Insbesondere kann die Verteilvorrichtung dazu eingerichtet sein, die vorgewärmten Preforms jeweils selektiv einer beliebig bestimmbaren der Blasformen zuzuführen. Dadurch können die unterschiedlichen Preformtypen jeweils in die passenden Blasformen eingebracht werden.

Überaus bevorzugt weist das zweite Blasrad mindestens eine offenbarungsgemäße Blasform auf. Für das zweite Blasrad gelten die für das (erste) Blasrad beschriebenen Ausführungsformen und Modifikationen analog.

Gemäß einem weiteren außerordentlich bevorzugten Aspekt ist vorgesehen, dass das erste Blasrad mindestens eine offenbarungsgemäße Blasform zur Herstellung von Kunststoffflaschen mit einem ersten Durchmesser und mit unterschiedlichen Volumina aufweist und dass das zweite Blasrad mindestens eine offenbarungsgemäße Blasform zur Herstellung von Kunststoffflaschen mit einem zweiten Durchmesser und mit unterschiedlichen Volumina aufweist, wobei sich der zweite Durchmesser von dem ersten Durchmesser unterscheidet.

Der erste Durchmesser und der zweite Durchmesser können sich beispielsweise beziehen auf den
- Neckring-Durchmesser,
- den Durchmesser des Flaschenbodens (quer zur Längsrichtung), oder
- den Durchmesser des Flaschenbauchs
der jeweiligen Kunststoffflaschen.

Das erhöht die Flexibilität der Blasanlage noch weiter. Die Blasanlage kann gleichzeitig und bedarfsangepasst sowohl Kunststoffflaschen mit dem ersten Durchmesser als auch Kunststoffflaschen mit dem zweiten Durchmesser herstellen. Zusätzlich kann die Blasanlage die Füllvollvolumina für beide Durchmesser-Typen jeweils bedarfsgerecht, ohne Umrüstung und für jede Kunststoffflasche individuell im laufenden Produktionsbetrieb ohne Produktionsunterbrechung bzw. Umrüstung anpassen. Beispielsweise kann der erste Durchmesser im Bereich von 55 mm bis 75 mm liegen und der zweite Durchmesser kann im Bereich von 85 mm bis 105 mm liegen, wobei sich der erste Durchmesser und der zweite Durchmesser jeweils auf den Flaschenboden und/oder den Flaschenbauch beziehen.

In einer äußerst bevorzugten Ausführungsform Aspekt ist das erste Blasrad dazu eingerichtet, Kunststoffflaschen mit unterschiedlichen Füllvolumina von 0,2 l bis 0,75 l herzustellen, und das zweite Blasrad ist dazu eingerichtet, Kunststoffflaschen mit unterschiedlichen Füllvolumina von 0,7 l bis 2,0 l herzustellen.

Freilich kann das erste Blasrad mehrere offenbarungsgemäße Blasformen zur Herstellung von Kunststoffflaschen mit dem ersten Durchmesser und mit unterschiedlichen Volumina aufweisen. Alternativ oder zusätzlich kann das zweite Blasrad mehrere offenbarungsgemäße Blasformen zur Herstellung von Kunststoffflaschen mit dem zweiten Durchmesser und mit unterschiedlichen Volumina und aufweisen. Das erhöht die Produktionskapazität für die jeweiligen Kunststoffflaschen.

Die Blasformen für die Kunststofflaschen mit dem ersten Durchmesser und die Kunststofflaschen mit dem zweiten Durchmesser können beispielsweise durch verschiedene, austauschbare Innenformen für den ersten Durchmesser und den zweiten Durchmesser realisiert sein. Das steigert die Flexibilität noch weiter, da die Innenformen ausgetauscht werden.

Auch in dem Fall, dass das erste Blasrad und das zweite Blasrad (zumindest teilweise) unterschiedliche Blasformen aufweisen, können sie wie oben beschrieben durch einen gemeinsamen Ofen und die Verteilvorrichtung mit vorgewärmten Preforms bestückt werden. Dadurch kann die Produktion besonders schnell die Produktionsmengen von Kunststoffflaschen mit dem ersten Durchmesser und von Kunststoffflachen mit dem zweiten Durchmesser variieren.

Mit den beschriebenen Ausführungsformen wird eine flexible, universelle Blasanlage realisiert. Sie kann Kunststoffflaschen verschiedener Ausführungen in beliebiger Reihenfolge herstellen. Die Reihenfolge kann bedarfsabhängig und/oder individuell auftragsmäßig vorgegeben werden. Beispielsweise können flexibel, in beliebigen Anteilen zueinander und in beliebiger Reihenfolge vier unterschiedliche Ausführungen von Kunststoffflaschen hergestellt werden: Mit dem ersten Blasrad Kunststoffflaschen mit dem ersten Durchmesser mit zwei unterschiedliche Füllvolumina und mit dem zweiten Blasrad Kunststoffflaschen mit dem zweiten Durchmesser mit zwei unterschiedliche Füllvolumina. Im Allgemeinen kann eine höhere Anzahl von verschiedenen Ausführungen von Kunststoffflaschen herstellbar sein.

Außerordentlich bevorzugt ist eine Maximalleistung (maximale Produktionsleistung) des ersten Blasrades an eine maximale Abfüllleistung einer nachgeschalteten Abfüllanlage angepasst. Insbesondere kann eine maximale Produktionsleistung des ersten Blasrades für Kunststoffflaschen, die ein kleinstes mit dem ersten Blasrad realisierbares Füllvolumen aufweisen, an die maximale Abfüllleistung der nachgeschalteten Abfüllanlage angepasst sein. In diesem Sinne kann bei der Maximalleistung ein zusammengenommenes Füllvolumen aller pro Zeiteinheit hergestellten Kunststofflaschen mit dem kleinsten Füllvolumen, das mit dem ersten Blasrad realisierbar ist, (Einheit: Flaschen/Stunde × Liter/Flasche) zumindest im Wesentlichen der Maximalleistung der Abfüllleistung der Abfüllanlage (Einheit: Liter/Stunde) entsprechen. So lässt sich die Abfüllanlage mit dem ersten Blasrad alleine vollständig auslasten.

Alternativ oder zusätzlich ist bevorzugt eine Maximalleistung (maximale Produktionsleistung) des zweiten Blasrades an die maximale Abfüllleistung der nachgeschalteten Abfüllanlage angepasst. Insbesondere kann die maximale Produktionsleistung des ersten Blasrades für Kunststoffflaschen, die ein kleinstes mit dem zweiten Blasrad realisierbares Füllvolumen aufweisen, an die maximale Abfüllleistung der nachgeschalteten Abfüllanlage angepasst sein. In diesem Sinne kann bei der Maximalleistung ein zusammengenommenes Füllvolumen aller pro Zeiteinheit hergestellten Kunststofflaschen mit dem kleinsten Füllvolumen, das mit dem zweiten Blasrad realisierbar ist, (Einheit: Flaschen/Stunde × Liter/Flasche) zumindest im Wesentlichen der Maximalleistung der Abfüllleistung der Abfüllanlage (Einheit: Liter/Stunde) entsprechen. So lässt sich die Abfüllanlage mit dem zweiten Blasrad alleine vollständig auslasten.

Das erste Blasrad und das zweite Blasrad können unterschiedliche Anzahlen von Blasformen aufweisen. Das ist in Kombination mit den zuvor beschriebenen Maximalleistungen besonders vorteilhaft, da sich kleinsten Füllvolumina (Einheit: Liter/Flasche), die mit dem ersten Blasrad und dem Zweiten Blasrad realisierbar sind, unterscheiden können.

Wenn die Blasanlage mehr als zwei Blasräder aufweist, kann die Verteilvorrichtung insbesondere Verteilvorrichtung zur Zuführung vorgewärmter Preforms aus dem gemeinsamen Ofen zu allen Blasrädern eingerichtet sein. Die Ausführungsformen und Vorteile können entsprechend bezüglich aller Blasräder gelten.

Gemäß einem weiteren vorteilhaften Aspekt umfasst die Blasanlage ein Ausgabesystem zur Ausgabe und/oder Übergabe der hergestellten Kunststoffflaschen eingerichtet ist.

Das Ausgabesystem kann dazu eingerichtet sein, die Kunststoffflaschen an zumindest eine Abfüllanlage zu übergeben. Überaus bevorzugt weist das Ausgabesystem mindestens zwei Übergabewege zur Übergabe der Flaschen auf, insbesondere einen ersten Übergabeweg für Kunststoffflaschen mit dem ersten Durchmesser und einen zweiten Übergabeweg für Kunststofflaschen mit dem zweiten Durchmesser. Es können noch mehr Übergabewege ausgebildet sein, beispielsweise ein Übergabeweg für jede herstellbare Ausführung von Kunststoffflaschen. Außerordentlich bevorzugt weist jeder Übergabeweg eine Pufferstrecke auf.

Das Ausgabesystem kann teilweise oder vollständig als Lufttransportsystem ausgebildet sein. In dem Lufttransportsystem werden die fertigen Kunststofflaschen hängend und mündungsgleich geführt. Das ermöglicht einen schnellen und zuverlässigen Transport der Kunststoffflaschen in der Massenproduktion.

Beispielsweise können an einem Auslauf der Blasanlage mehrere Lufttransporteure ausgebildet sein, wobei die Blasanlage dazu eingerichtet ist, unterschiedlich große Kunststoffflaschen an dem Auslauf jeweils in separate Lufttransporteure einzufädeln.

In einer Weiterbildung der Erfindung umfasst die Blasanlage eine (automatische) Regelung für eine optimale Ausbringung von
- einer Anzahl von Kunststoffflaschen pro Zeiteinheit (Einheit: Flaschen/Stunde) und/oder
- eines Gesamt-Füllvolumens der hergestellten Kunststofflaschen pro Zeiteinheit (Einheit: Liter/Stunde)

Besonders bevorzugt erlaubt die Blasanlage eine Umstellung zwischen beiden Regelungszielen. Die gewünschte Ausbringung kann bedarfsabhängig und/oder individuell auftragsmäßig vorgegeben werden. Beispielsweise kann die Blasanlage dazu eingerichtet sein, Produktionsvorgaben unmittelbar von einer nachgeschalteten Abfüllanlage und/oder einer zentralen Steuerung für die Blasanlage und die nachgeschaltete Abfüllanlage zu erhalten.

Gemäß einem weiteren Aspekt ist die Blasanlage Industrie 4.0-fähig. Eine Steuerung der Blasanlage ist dazu eingerichtet, Information elektronisch unmittelbar von externen Vorgabequellen zu umfassen und die Produktion automatisch basieren auf der den Informationen zu regeln. Die Vorgabequellen können sein oder umfassen:
- Die nachgeschaltete Abfüllanlage,
- die zentrale Steuerung, und/oder
- mindestens ein elektronisches Auftragssystem zur Generierung von Produktionsanfragen und/oder -aufträgen.

Das elektronische Auftragssystem kann beispielsweise ein Auftragssystem eines Kunden sein.

Mit anderen Worten ist die Blasanlage zur automatischen On-Demand-Produktion und zur entsprechenden automatischen Regelung der Herstellung von Kunststoffflaschen eingerichtet.

Die vorliegende Offenbarung bezieht sich damit auch auf die Kombination der Blasanlage mit einer Abfüllanlage, insbesondere auf ein System umfassend eine Blasanlage gemäß einer der beschriebenen Ausführungsformen und mindestens eine Abfüllanlage, wobei die mindestens eine Abfüllanlage der Blasanlage unmittelbar nachgeschaltet ist. Die vorliegende Offenbarung bezieht sich auch auf die Verwendung einer Blasanlage gemäß einer der beschrieben Ausführungsformen zur Bereitstellung von Kunststofflaschen unterschiedlicher Ausführungen für mindestens eine Abfüllanlage.

Die obige Aufgabe wird außerdem gelöst durch ein Verfahren mit den Merkmalen des Anspruchs 14.

Es handelt sich um Verfahren zur Herstellung von Kunststoffflaschen mit unterschiedlichen Volumina mittels derselben Blasform einer Blasanlage, wobei die Kunststoffflaschen jeweils zumindest einen Flaschenboden, einen Flaschenhals und einen Mündungsbereich aufweisen, wobei die Blasform in einem geschlossenen Zustand der Blasform einen Innenraum mit einer Kavität ausbildet, wobei sich der Innenraum entlang einer Längsrichtung von einem Mündungsabschnitt für den Mündungsbereich bis zu einem Formboden zur Ausbildung des Flaschenbodens erstreckt,
wobei das Verfahren zumindest folgende Schritte umfasst:
- Einbringen eines Preforms für die jeweilige Kunststofflasche in die Blasform und Schließen der Blasform;
- Einstellen einer Bauchlänge der Kavität in der Längsrichtung zwischen einem Halsabschnitt der Kavität zur Ausbildung des Flaschenhalses und dem Formboden zum Einstellen des Volumens der jeweils herzustellenden Kunststoffflasche;
- Streckblasen der jeweiligen Kunststoffflasche in der Blasform; und
- Öffnen der Blasform und Entformen der Kunststoffflasche seitlich zu der Längsrichtung.

Dabei stellt die Blasform die Bauchlänge automatisch ein. Ferner stellt die Blasanlage einen Gesamthubs eines Streckdorns für das Streckblasen der jeweiligen Kunststoffflasche in der Blasform in Abhängigkeit von der Bauchlänge automatisch ein.

Das erfindungsgemäße Verfahren erlaubt es, unmittelbar nacheinander ohne Umrüstung oder gar Austausch der Blasform Kunststoffflaschen mit unterschiedlichen Volumina herzustellen. Mit anderen Worten: Kunststoffflaschen mit unterschiedlichen Volumina können in beliebiger Reihenfolge unmittelbar nacheinander im Mischbetrieb produziert werden.

Durch das seitliche Entformen wird die Kunststoffflasche sehr schnell und sehr einfach aus der Blasform gebracht. Die Blasform steht sehr schnell zur Aufnahme eines neuen Preforms bereit. Die fertige Kunststoffflasche kann beispielsweise herausgezogen, herausgedrückt, herausgepustet und/oder herausgekippt werden. Das schnelle Entformen der fertigen Kunststoffflasche ist absolut entscheidend für die Tauglichkeit des Verfahrens für die Massenproduktion. Nur so können die hohen Produktionsleisten, für die moderne Getränkeindustrie erforderlich sind, auf begrenztem Raum realisiert werden.

Das Verfahren kann zusätzlich weitere Merkmale, die vorstehend in Zusammenhang mit der Blasform, dem Blasrad und der Blasanlage beschrieben sind, entsprechend aufweisen bzw. anwenden und umgekehrt. Die Modifikationen und Vorteile gelten entsprechend.

Beim Steckblasen einer Kunststoffflasche aus einem Preform wird der Preform in der Blasform vor dem Aufblasen und/oder während des Aufblasens durch einen Streckdorn entlang der Längsrichtung in die Länge gezogen. So wird zumindest ein Großteil der Verstreckung entlang der Längsrichtung durch eine Bewegung des Streckdorns entlang der Längsrichtung mit direktem mechanischem Kontakt des Streckdorns zu dem Preform, insbesondere zu dem Bodenbereich des Preforms, erreicht. Dadurch ergibt sich eine gleichmäßige Wandstärke der Kunststoffflasche.

Der Gesamthub des Streckdorns für das Streckblasen der jeweiligen Kunststoffflasche in der Blasform wird deshalb in Abhängigkeit von der Bauchlänge eingestellt. Anders ausgedrückt wird eine Amplitude des Streckdorns beim Streckblasen der Länge der herzustellenden Kunststoffflasche angepasst.

Die Blasanlage bzw. insbesondere das Blasrad können eine Verfahrvorrichtung zum Verfahren des Streckdorns in der Blasform aufweisen. Beispielsweise kann die Blasanlage eine Steuervorrichtung aufweisen, die den Gesamthub des Streckdorns für das Streckblasen der jeweiligen Kunststoffflasche in der Blasform in Abhängigkeit von der Bauchlänge automatisch anpasst.

In einer Weiterbildung umfasst das Verfahren die folgenden Schritte:
- Bereitstellen unterschiedlicher Preformtypen, wobei sich die unterschiedlichen Preformtypen zumindest in ihrer geometrischen Struktur voneinander unterscheiden; und
- Auswählen eines Preforms von einem der unterschiedlichen Preformtypen für die jeweils herzustellende Kunststoffflasche und selektives Zuführen dieses Preforms zu der Blasform.

Beispielsweise wird für Kunststoffflaschen mit einer ersten Bauchlänge jeweils ein Preform eines ersten Preformtyps ausgewählt und für Kunststoffflaschen mit einer zweiten Bauchlänge, die länger ist als die erste Bauchlänge, wird jeweils Preform eines zweiten Preformtyps ausgewählt, wobei eine Länge des Streckbereichs des zweiten Preformtyps länger ist als eine Länge des Streckbereichs des ersten Preformtyps. Die Mündungsbereiche des ersten Preformtyps und des zweiten Preformtyps können gleich sein. Besonders bevorzugt sind die Durchmesser und/oder Wandstärken des ersten Preformtyps und des zweiten Preformtyps gleich. Überaus bevorzugt unterscheiden sich der erste Preformtyp und der zweite Preformtyp zumindest im Wesentlich nur in der Länge ihrer Streckbereiche und in ihrem Gewicht.

Derselben Blasform werden also im Mischbetrieb gegebenenfalls unmittelbar nacheinander Preforms unterschiedlicher Preformtypen zugeführt, die sich in den Längen ihrer Streckbereiche unterscheiden.

Allgemeiner ausgedrückt: Wenn Kunststoffflaschen mit mehreren unterschiedlichen Bauchlängen hergestellt werden, so werden bevorzugt mehrere unterschiedliche Preformtypen bereitgestellt, die sich in den Längen ihrer Streckbereiche unterscheiden. Das stellt eine optimale Flaschenqualität bei möglichst geringem Kunststoffgewicht. Weniger Kunststoffgewicht bedeutet weniger Materialkosten, weniger Transportkosten und weniger Abfall.

Durch das Auswählen eines Preforms von einem der unterschiedlichen Preformtypen für die jeweils herzustellende Kunststoffflasche und selektives Zuführen dieses Preforms zu der Blasform ist es möglich, einen Preform zu verwenden, mit dem das optimale oder ein zumindest annährend optimales Streckverhältnis erzielt wird.

Überaus bevorzugt wird zur Herstellung einer Kunststoffflasche der verwendete Preformtyp jeweils derart ausgewählt, dass das Streckverhältnis entlang der Längsrichtung zwischen 2:1 und 4:1 liegt, außerordentlich bevorzugt zwischen 2,8:1 und 3,2:1. Entsprechend werden unterschiedliche Preformtypen bereitgestellt und der Blasform selektiv in Abhängigkeit von der gerade herzustellenden Kunststoffflasche zugeführt.

Vorteilhafterweise beträgt ein Streckverhältnis für den Preform beim Streckblasen (etwa) 3:1. Das bedeutet, dass der Streckbereich sowohl in der Längsrichtung als auch im Durchmesser (quer zur Längsrichtung) jeweils in einem Verhältnis von etwa 3:1 gestreckt wird. Dadurch stellen sich besonders vorteilhafte Materialeigenschaften für die Kunststoffflasche ein.

Gemäß einem anderen Aspekt der Blasanlage im Mischbetrieb Preforms mehrerer unterschiedlicher Preformtypen aus mehreren Vorratssilos zugeführt. Beispielsweise kann für jeden Preformtyp mindestens ein eigenes Vorratssilo vorgesehen sein.

Die Erfindung wird nachfolgend anhand von Ausführungsbeispielen und unter Bezugnahme auf die Figuren erläutert.

Es zeigen schematisch:

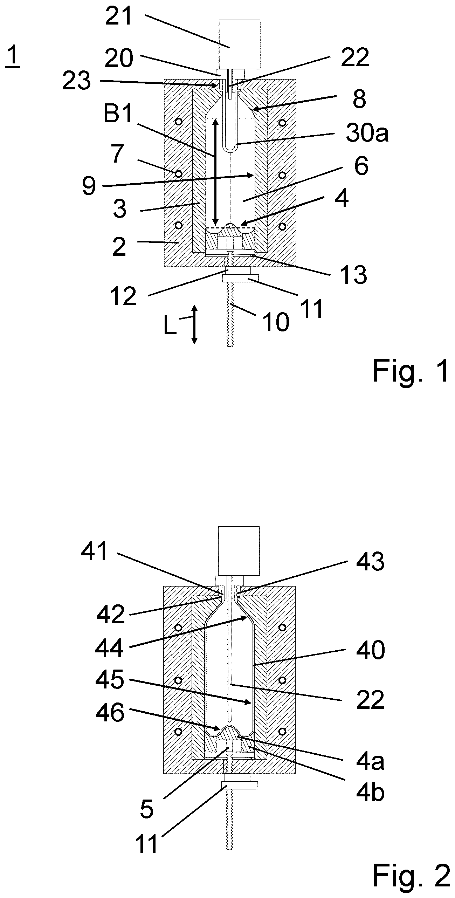

- Fig. 1: einen Querschnitt einer Ausführungsform einer offenbarungsgemäßen Blasform einer erfindungsgemäßen Blasanlage im geschlossenen Zustand mit einem darin aufgenommenen Preform zum Streckblasen einer Kunststoffflasche, wobei eine Bauchlänge einer Kavität auf einen maximalen Wert eingestellt ist;
- Fig. 2: den Querschnitt der Blasform aus Fig. 1, nachdem der Preform zu der Kunststofflasche aufgeblasen wurde;

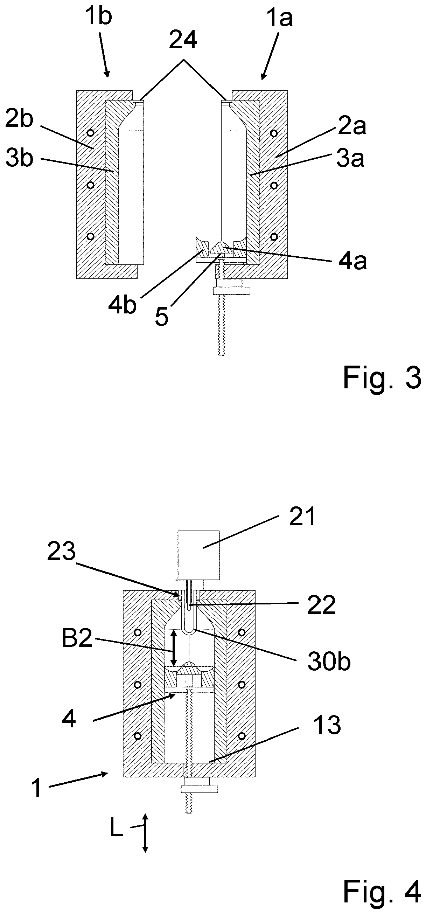

- Fig. 3: die Blasform aus den Fig. 1 und Fig. 2 nach dem Entformen der hergestellten Kunststoffflasche in einem geöffneten Zustand, wobei ein Zentralabschnitt eines Formbodens gegenüber einem Außenabschnitt des Formbodens nach unten verfahren ist, um das Entformen der Kunststoffflasche zu erleichtern;
- Fig. 4: den Querschnitt der Blasform aus Fig. 1 im geschlossenen Zustand mit einem darin aufgenommenen, kürzeren Preform eines zweiten Preformtyps zum Streckblasen einer Kunststoffflasche mit einem geringeren Füllvolumen als in Fig. 1, wobei die Bauchlänge in Fig. 4 entsprechend auf einen deutlich kleineren Wert eingestellt ist als in Fig. 1;

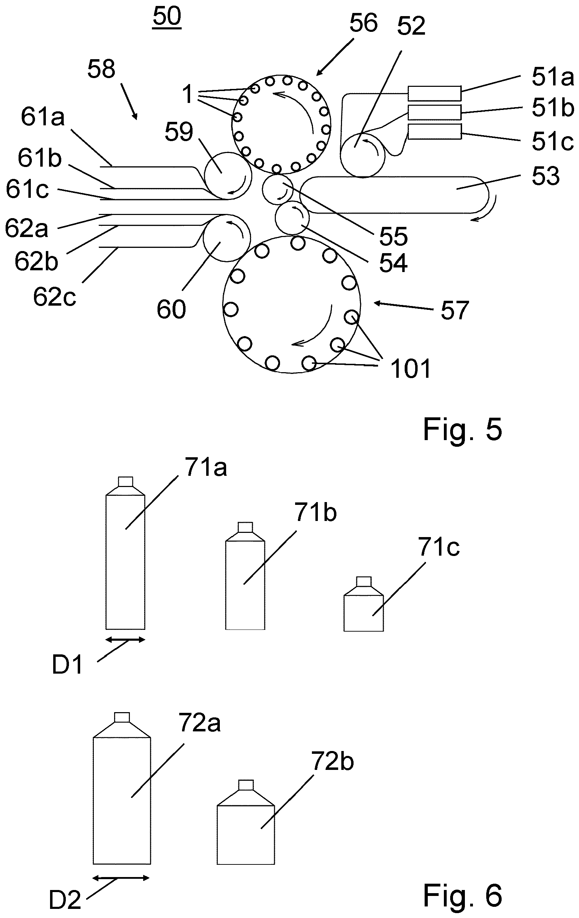

- Fig. 5: eine Ausführungsform einer erfindungsgemäße Blasanlage mit mehreren Vorratssilos für unterschiedliche Preformtypen, einem Entnahmesystem zur selektiven Entnahme von Preforms aus den Vorratssilos und zur Zuführung zu einem gemeinsamen Ofen, einer Verteilvorrichtung zur selektiven Verteilung der aufgeheizten Preforms aus dem gemeinsamen auf ein erstes Blasrad und ein zweites Blasrad und mit einem Ausgabesystem zur Ausgabe bzw. Übergabe der fertigen Kunststofflaschen;
- Fig. 6: die unterschiedlichen Ausführungen von Kunststoffflaschen, welche die Blasanlage aus Fig. 5 bedarfsgerecht und in beliebigen Anteilen zueinander und in beliebiger Reihe herstellen kann.

Fig. 1 einen Querschnitt einer Ausführungsform einer offenbarungsgemäßen Blasform 1 einer erfindungsgemäße Blasanlage in einem geschlossenen Zustand. Die Blasform 1 umfasst eine äußere Form 2 und eine Innenform 3. Die Blasform 1 weist einen in einer Längsrichtung L verfahrbaren Formboden 4 zur Einstellung einer Bauchlänge B1, B2 auf.

Die Blasform 1 dient zur Herstellung von Kunststoffflaschen 40 mit unterschiedlichen Füllvolumina. Das wird weiter unten beschrieben. Jede Kunststoffflasche 40 weist zumindest einen Mündungsabschnitt 41, einen Flaschenhals 44 und einen Flaschenboden 46 auf. Wenn die Bauchlänge B1, B2 der Kunststoffflasche 40 größer als null ist, weist sie außerdem auch einen Flaschenbauch 45 auf.

Um den Preform 30a, 30b in der Blasform 1 zu positionieren, wird der Preform 30a, 30b von einer Handlingvorrichtung 22 gehalten und in die Blasform 1 eingebracht. In der hier gezeigten Ausführungsform wird der Preform 30a, 30b von der Handlingvorrichtung 22 an seiner Innenseite gehalten.

Wenn die Blasform 1 geschlossen ist, definiert sie einen Innenraum. An einem Ende, das in der Längsrichtung L dem Formboden 4 abgewandt ist, weist der Innenraum einen Mündungsabschnitt 23 auf, in welchem der Mündungsbereich 41 des Preforms 30a, 30b positioniert wird. Der Mündungsbereich 41 bildet später unverändert den Mündungsbereich 41 der Kunststoffflasche 40 (siehe Fig. 2). Wenn der Preform 30a, 30b in der Blasform 1 positioniert ist und die Blasform 1 geschlossen ist, dann ist ein Neckring 42 des Mündungsbereichs 41 des Preforms 30a, 30b in eine Neckringaufnahme 24 der Blasform 1 aufgenommen (siehe Fig. 1 und Fig. 2). In dieser Ausführungsform ist die Handlingvorrichtung 22 dazu eingerichtet, den Neckring 42 des Preforms 30a, 30b von oben gegen die Neckringaufnahme 24 zu drücken. Die Neckringaufnahme 24 ist in der leeren und geöffneten Blasform 1 in Fig. 3 gut zu erkennen.

Auf einer Seite des Innenraums entlang der Längsrichtung L, an welcher der Formboden 4 angeordnet ist, definiert der Innenraum der geschlossenen Blasform 1 eine Kavität 6. Wenn der Preform 30a, 30b in der geschlossenen Blasform 1 positioniert, dann ragt ein Streckbereich des Preforms 30a, 30b in die Kavität 6 hinein. Der Streckbereich des Preforms 30a, 30b wird während des Streckblasens in der Kavität 6 expandiert, während der Mündungsabschnitt 41(zumindest im Wesentlichen) unverändert bleibt.

Die Blasform 1 ist entlang ihrer kompletten Länge in der Längsrichtung L quer zu der Längsrichtung L in eine erste Formhälfte 1a und eine zweite Formhälfte 1b geteilt. Die Blasform 1 kann über ihre komplette Länge und insbesondere über eine komplette Länge ihres Innenraums (einschließlich der Kavität 6 und des Mündungsabschnitts 23) seitlich zu der Längsrichtung L geöffnet werden (siehe Fig. 3). Das heißt, sowohl der Mündungsabschnitt 23 zur Aufnahme des Mündungsbereichs 41 der Kunststoffflasche 40 bzw. des Preforms 30a, 30b und die Kavität 6 sind geöffnet. Dadurch kann die hergestellte Kunststoffflasche 40 seitlich aus der ersten Formhälfte 1a entnommen werden. Zum Herausbewegen der Kunststofflasche 40 aus der Blasform 1, insbesondere aus der ersten Formhälfte 1a, kann beispielsweise die Handlingvorrichtung 22 genutzt werden.

In Fig. 3 ist die Blasform 1 aus Fig. 1 in ihrem geöffneten Zustand gezeigt. Die zweite Formhälfte 1b ist von der ersten Formhälfte 1a seitlich zu der Längsrichtung L wegbewegt, sodass die in Fig. 2 gezeigte, aus dem Preform 30a hergestellte Kunststoffflasche 40 entfernt werden konnte. In Fig. 3 ist außerdem sichtbar, dass die äußere Form 2 entsprechend über ihre gesamte Länge in der Längsrichtung L quer zu der Längsrichtung L in eine erste äußere Formhälfte 2a und eine zweite äußere Formhälfte 2b geteilt ist. Analog ist auch die Innenform 2 über ihre gesamte Länge in der Längsrichtung L quer zu der Längsrichtung L in eine erste Innenformhälfte 2a und eine zweite Innenformhälfte 2b geteilt.

Die Blasform 1 weist ein Verschlusssystem (nicht gezeigt) auf, um die Blasform 1 zu öffnen und zu schließen. Es umfasst ein Öffnungssystem zum seitlichen Verfahren und/oder Verschwenken der zweiten Formhälfte 1b gegenüber der ersten Formhälfte 1a. Dazu kann beispielsweise ein Elektromotor oder ein pneumatischer Antrieb verwendet werden.

Das Verschlusssystem umfasst außerdem ein Verriegelungssystem mit mehreren automatischen Verschlussstiften, um die erste äußere Formhälfte 1a und die zweite äußere Formhälfte 1b miteinander zu verriegeln, wenn die Blasform 1 geschlossen ist, und sie zum Öffnen voneinander zu entriegeln. Die erste Innenformhälfte 3a und die zweite Innenformhälfte 3b werden nicht unmittelbar aneinander verriegelt. Die Innenform 3 nimmt daher während des Streckblasens keine Zugkräfte auf, sondern überträgt lediglich Druckkräfte auf die verriegelte, äußere Form 2. Die verriegelte äußere Form 2 nimmt die Zugkräfte in einer Umfangsrichtung um die Längsrichtung L auf.

Ein Material der Innenform 3 umfasst Aluminium. Bevorzugt ist die Innenform 3 aus einer Aluminiumlegierung hergestellt. Die Innenform 3 bestimmt die genaue Gestaltung der herzustellenden Kunststoffflasche 40. Die Innenform 3 ist austauschbar. Dadurch kann sie leicht ersetzt werden, wenn sie verschlissen oder beschädigt ist.

Außerdem können mittels verschiedener, austauschbarer Innenformen 3 mit derselben Blasform 1 unterschiedlich gestaltete Typen von Kunststoffflaschen 40 hergestellt werden. Die unterschiedlichen Typen können sich beispielsweise in der Gestaltung eines Halsabschnitts 8 zur Ausbildung des Flaschenhalses 44 unterscheiden. Entsprechend kann die Blasform 1 austauschbare Innenformen 3 mit unterschiedlichen Halsabschnitten 8 umfassen. Wenn zugleich der Formboden 4 austauschbar ist, dann können sogar verschiedene Innenformen 3 mit unterschiedlichen Durchmessern im Bereich einer Seitenwand 9 und verschiedene Formböden 4 mit korrespondierenden, unterschiedlichen Durchmessern vorgesehen sein. Entsprechend können in derselben Blasform 1 Kunststoffflaschen 40 mit unterschiedlichen Durchmessern der Flaschenbäuche 45 produziert werden. Dies bedarf jedoch eines Austauschs der Innenform 3 und des Formbodens 4.

Die Preforms 30a, 30b werden vor dem Streckblasen vorgeheizt, beispielsweise durch den gemeinsamen Ofen 53 der Blasanlage 50 in Fig. 5. Das Streckblasen findet typischerweise bei Temperaturen im Bereich von 90 °C bis 120 °C statt. Zugleich soll der Kunststoff aber schnell abkühlen, wenn er in Kontakt mit einer Innenwand der Blasform 1 (Wand der Kavität 6) gerät. Dadurch wird die Kunststoffflasche 40 mechanisch stabil und kann entformt werden. Da die Innenform 3 aus einer Aluminiumlegierung ist, leitet sie die Wärme schnell von der Kavität 6 nach außen ab. Zusätzlich sind in der äußeren Form 2 mehrere Temperierkanäle 7 vorgesehen. Mittels der Temperierkanäle 7 kann die Blasform 1 gekühlt, geheizt und/oder temperiert werden. Alternativ oder zusätzlich können einer oder mehrere Temperierkanäle in der Innenform 3 vorgesehen sein.

Der Formboden 4 der Blasform 1 ist entlang der Längsrichtung L automatisch verfahrbar. Auf diese Weise ist die Bauchlänge B1, B2 der Kavität 6 der Blasform verstellbar bzw. einstellbar. Die Kavität 6 umfasst den Halsabschnitt 8 zur Ausbildung des Flaschenhalses 44, einen Bauchabschnitt zur Ausbildung des Flaschenbauchs 45 und einen Bodenabschnitt zur Ausbildung des Flaschenbodens 46. Die Innenform 3 definiert den Halsabschnitt 8 und - mittels einer entlang der Längsrichtung L geraden Seitenwand 9 - den Bauchabschnitt mit der Bauchlänge B1, B2. Der Formboden 4 definiert den Bodenabschnitt.

Fig. 1 ist eine maximale Bauchlänge B1 der Blasform 1 eingestellt. Der Formboden 4 ist ganz nach unten verfahren. Das bedeutet, der Formboden 4 befindet entlang der Längsrichtung L in einer maximalen Entfernung von dem Halsabschnitt 8. Auf diese Weise ist die Blasform dazu eingerichtet, eine Kunststoffflasche 40 mit einem maximalen Füllvolumen herzstellen. Dabei kann es sich zum Beispiel um die in Fig. 6 vereinfacht dargestellte Kunststoffflasche 71a handeln.

In Fig. 4 ist die Blasform 1 aus Fig. 1 dagegen auf die Bauchlänge B2 eingestellt, die kleiner ist als die Bauchlänge B1 in Fig. 1. Dadurch ist die Blasform 1 in dem in Fig. 4 gezeigten Zustand dazu eingerichtet, eine Kunststoffflasche mit einem wesentlich kleineren Füllvolumen herzustellen als in dem Zustand in Fig. 1 und Fig. 2. Zum Beispiel kann mit der in Fig. 4 gezeigten, kurzen Bauchlänge B2 die in Fig. 6 vereinfach dargestellte Kunststoffflasche 71c hergestellt werden.

Die Gestalt des Flaschenhalses 44, des Flaschenbodens 46 und ein Durchmesser des Flaschenbauchs 45 quer zu der Längsrichtung ändern sich durch die Verstellung der Bauchlänge B1, B2 nicht. Die Änderung der Bauchlänge B1, B2 führt zu einer Veränderung der Bauchlänge B1, B2 des Flaschenbauchs 45 der herzustellenden Kunststoffflasche 40 in der Längsrichtung L und damit zu einer unterschiedlichen Gesamtlänge der herzustellenden Kunststoffflasche 40 in der Längsrichtung L. Die Begriffe Bauchlänge B1, B2 werden insofern gleichermaßen für die Blasform 1 und die Kunststofflasche 40 verwendet.

Das wird auch an den in Fig. 6 vereinfacht dargestellten Kunststoffflaschen 71a, 71b und 71c ersichtlich, die alle mit der Blasform 1 hergestellt werden können. Sie haben den gleichen (äußeren) Durchmesser D1 des Flaschenbauchs quer zu ihrer Längsrichtung, allerdings unterschiedlich lange Bauchlängen und damit unterschiedliche Füllvolumina. Zum Beispiel hat in Fig. 6 die größte Kunststoffflasche 71a ein Füllvolumen von 0,75 l, die mittlere Kunststoffflasche 71b ein Füllvolumen von 0,5 l und die kleinste Kunststoffflasche 71c ein Füllvolumen von 0,2 l. Alle drei Ausführungen von Kunststoffflaschen 71a, 71b, 71c können in derselben Blasform 1 nacheinander hergestellt werden, ohne dass eine Umrüstung erforderlich ist. Es muss nur die Bauchlänge B1, B2 umgestellt werden.

Zur Einstellung des Formbodens 4 der Blasform 1 ist eine automatische Längsverstellung (eine automatische Längsverstellungsvorrichtung) vorgesehen. Die Längsverstellung umfasst einen Steilgewindespindel 10, einen Servomotor 11 zum Antrieb der Steilgewindespindel 10 und eine Bremse 12 zum Fixieren der Steilgewindespindel 10 (und somit des Formbodens 4) in der jeweils eingestellten Position. Die Bremse 12 verhindert dadurch, dass sich die Steilgewindespindel 10 beim Streckblasen dreht. Die Steilgewindespiegel 10 ist mit der ersten Formhälfte 1a und/oder der Bremse 12 in Gewindeeingriff, sodass eine Drehung der Steilgewindespindel um ihre Längsachse entlang der Längsrichtung L eine Verschiebung der Steilgewindespindel 10 und somit des Formbodens 4 entlang der Längsrichtung L bewirkt.

In dieser Ausführungsform ist der Servomotor 11 mit einem Encoder (nicht gezeigt) ausgestattet. Damit werden die Verstellung der Steilgewindespindel 10 und folglich die Verstellung des Formbodens 4 überwacht. In dieser Ausführungsform umfasst die Längsverstellung zusätzlich einen optionalen Endschalter 13. Der Endschalter 13 wird aktiviert, wenn der Formboden 4 auf die maximale Bauchlänge B1 eingestellt ist. Entsprechend berührt der Formboden 4 in Fig. 1 den Endschalter 13. In anderen Ausführungsformen kann die automatische Längsverstellung andere Linearantriebe aufweisen, beispielsweise einen Pneumatikzylinder, einen Hydraulikzylinder und/oder einen Schrittmotor.

Ein Messsystem zur Überwachung der Verstellung des Formbodens 4 kann beispielsweise den Encoder, den Endschalter 13 und optional, einen Endschalter für eine minimale Bauchlänge, und/oder Hall-Sensoren aufweisen.

Fig. 4 zeigt nicht die minimale Bauchlänge. Der Formboden 4 kann entlang der Längsrichtung L noch weiter in Richtung des Halsabschnitts 8 bewegt werden, bis der Formboden 4 in Längsrichtung direkt an den Halsabschnitt 8 angrenzt. In diesem Fall wird die Bauchlänge der herzustellenden Flasche null.

Beim Streckblasen von Kunststoffflaschen sollte bevorzugt ein Streckverhältnis von etwa 3:1 eingehalten werden. Das sorgt für eine gute Qualität der hergestellten Flaschen bei niedrigem Gewicht. Entsprechend ist in Fig. 1 mit maximal eingestellter Bauchlänge B1 ein Preform 30a eines ersten Preformtyps mit einem längeren Streckbereich in die Blasform 1 aufgenommen als in Fig. 2. In Fig. 2 ist ein Preform 30b eines zweiten Preformtyps in die Blasform mit der kürzer eingestellten Bauchlänge B2 aufgenommen. Der Streckbereich des Preforms 30b ist entlang der Längsrichtung L kürzer als der Streckbereich des Preforms 30a. So kann in beiden Fällen das optimale Streckverhältnis auch entlang der Längsrichtung L eingehalten werden. Die Mündungsbereiche 41 der Preforms 30a und 30b sind allerdings identisch.

Fig. 2 zeigt die Blasform 1 aus Fig. 1 nach dem Streckblasen der Kunststoffflasche 40 aus dem Preform 30a. Während des Streckblasens fährt ein Streckdorn-Antriebsvorrichtung 21 einen Streckdorn 22 von oben entlang der Längsrichtung L in die Kavität 6 zum Formboden 4 hin aus. Dadurch wird der in die Kavität 6 ragende Streckbereich des Preforms 30a mechanische entlang der Längsrichtung L verstreckt. Zugleich und/oder nach dem Ausfahren des Streckdorns 22 wird ein Innenraum des vorgeheizten Preforms 30a mit Druck beaufschlagt. Der in die Kavität 6 ragende Streckbereich des Preforms 30a wird dadurch in einer Radialrichtung quer zu der Längsrichtung L aufgeweitet, bis der Streckbereich schließlich in der Radialrichtung außen an der Innenwand der geschlossenen Blasform 1 (an der Wand der Kavität 6) anliegt. Auf diese Weise definiert der Halsabschnitt 8 die Gestalt des Flaschenhalses 44 der Kunststoffflasche 40, der Bauchabschnitt (bzw. die Seitenwand 9) den Flaschenbauch 45 und der Formboden 4 den Bodenabschnitt 46.

Der Mündungsbereich 41 der hergestellten Kunststoffflasche 40 umfasst einen Verschlussbereich von im Wesentlichen zylindermantelförmiger Grundform. An einer äußeren Umfangsfläche des Verschlussbereichs ist ein Deckelgewinde 43 vorgesehen. Der Mündungsbereich 41 weist auf einer der Flaschenöffnung entlang der Längsrichtung L gegenüberliegenden Seite außerdem den kreisringförmigen Neckring 42 auf. Der Neckring 42 dient zum Handling herzustellenden Kunststoffflasche 40. Der komplette Mündungsbereich 41 mitsamt Verschlussbereich, Deckelgewinde 43 und Neckring 42 ist bereits in dem Preform 30a fertig ausgebildet und wird beim Streckblasen nicht verändert, zumindest nicht im Wesentlichen. Der Mündungsbereich 41 der Kunststoffflasche ist insofern identisch mit einem Mündungsbereich des Preforms 30a.

Fig. 2 zeigt den Streckdorn 22 in seiner maximal ausgefahrenen Position und kurz vor dem Zurückfahren. Ein Gesamthub des Streckdorns 22 entlang der Längsrichtung L wird automatisch der eingestellten Bauchlänge B1, B2 angepasst. Wenn die Bauchlänge länger wird, wird auch der Gesamthub des Streckdorns 22 größer und umgekehrt. Der Streckdorn 22 fährt entlang der Längsrichtung L jeweils soweit aus, dass am Ende seines Gesamthubs nur ein kleiner Abstand von dem Formboden 4 verbleibt. Dieser Abstand ist bevorzugt kleiner als 2 cm, besonders bevorzugt kleiner als 1 cm.

Der Formboden 4 ist quer zu der Längsrichtung L in einen Zentralabschnitt 4a (ein erster Abschnitt) und in einen Außenabschnitt 4b (ein zweiter Abschnitt) unterteilt. Der Zentralabschnitt 4a umfasst eine Auswölbung, die sich in Richtung der Längsrichtung L in die Kavität 6 zum Halsabschnitt 8 hin vorwölbt. Die Auswölbung ist dazu eingerichtet, eine Einwölbung in der Mitte des Flaschenbodens 46 auszubilden. In einer Projektion entlang der Längsrichtung L ist der Zentralabschnitt 4a kreisscheibenförmig und der Außenabschnitt 4b umgibt den Zentralabschnitt 4b kreisringförmig. Ein äußerer Umfang des Außenabschnitts 4b liegt an der Seitenwand 9 an. Der Zentralabschnitt 4a ist relativ zu dem Außenabschnitt 4b entlang der Längsrichtung L bewegbar. Das ist unabhängig von der Verstellbarkeit des gesamten Flaschenbodens 4 in der Längsrichtung L.

Genauer ist in dieser Ausführungsform ein Einfahrmechanismus 5 vorgesehen, der den Zentralabschnitt 4a entlang der Längsrichtung zwischen einer Streckblasposition (siehe Figs. 1, 2, und 4) und eine Entformposition (siehe Fig. 3) verschieben kann. In der Streckblasposition schließt eine Innenwand des Zentralabschnitts 4a bündig mit einer Innenwand des Außenabschnitts 4b an, um den Flaschenboden 46 ausbilden zu können. In der Entformposition (siehe Fig. 3) ist der Zentralabschnitt 4a in der Längsrichtung L in Richtung weg von dem Halsabschnitt 8 eingefahren. Er ist um eine Strecke eingefahren, die etwas größer ist als eine Länge seiner Auswölbung entlang der Längsrichtung L. Dadurch kann die Kunststoffflasche 46 ungehindert seitlich (also quer zur Längsrichtung L) aus der ersten Formhälfte 1a entnommen werden.

Auf eine äußere Umfangsfläche des Formbodens 4 ist eine Hartmetallbeschichtung aufgebracht. Sie ist so dünn, dass sie hier nicht sichtbar ist. Die Hartmetallbeschichtung verringert die Reibung und den Verschleiß zwischen dem Formboden 4 und der Seitenwand 9 bei der Längsverstellung des Formbodens 4.

Fig. 5 zeigt schematisch eine Ausführungsform einer erfindungsgemäßen Blasanlage 50. Die Blasanlage 50 ist dazu eingerichtet, zumindest die in Fig. 6 gezeigten unterschiedlichen Kunststoffflaschen 71a, 71b, 71c, 72a und 72b herzustellen.

Die Blasanlage 50 weist mehreren Vorratssilos 51a, 51b, 51c für unterschiedliche Preformtypen auf. Beispielsweise könnte das Vorratssilo 51a Preforms 30a des ersten Preformtyps (wie in Fig. 1 gezeigt) bevorraten und das Vorratssilo 51b könnte Preforms 30b des zweiten Preformtyps (wie in Fig. 4) gezeigt bevorraten.

Ein Entnahmesystem entnimmt selektiv in Abhängigkeit von der jeweils zu produzierenden Kunststoffflasche 71a, 71b, 71c, 72a, 72b einen Preform aus einem der Vorratssilos 51a bis 51c und führt den entnommenen Preform einem gemeinsamen Ofen 53 zum Vorheizen der Preforms zu. In der gezeigten Ausführungsform umfasst das Entnahmesystem einen Zulaufstern 52. Das Entnahmesystem entnimmt jeweils einen Preform desjenigen Preformtyps, welcher für das Streckblasen der herzustellenden Kunststoffflasche 71a, 71b, 71c, 72a, 72b das beste Streckverhältnis bietet und/oder den passenden Mündungsbereich 41 aufweist.

Dem gemeinsamen Ofen 53 ist eine Verteilvorrichtung nachgeschaltet. Die Verteilvorrichtung verteilt die vorgeheizten Preforms selektiv auf ein erstes Blasrad 56 und ein zweites Blasrad 57. Die Verteilvorrichtung umfasst im vorliegenden Ausführungsbeispiel zwei Übergabesterne 54 und 55.

Das erste Blasrad 56 umfasst mehrere Blasformen 1 gemäß der obigen Beschreibung, beispielsweise sechzehn Blasformen 1. Das erste Blasrad 56 und seine Blasformen 1 sind zur Herstellung von Kunststofflaschen 71a, 71b, 71b mit einem ersten Durchmesser D1 des Flaschenbauchs bzw. Flaschenbodens eingerichtet. In diesem Beispiel beträgt der erste Durchmesser D1 65 mm. Entsprechend sind die Blasformen 1 des ersten Blasrades 56 zur Verarbeitung von Preforms mit einem ersten Neckringdurchmesser ausgebildet. Jede der Blasformen 1 des ersten Blasrades 56 kann nacheinander wahlweise beliebig Kunststoffflaschen 71a, 71b und 71c herstellen, also verschieden Kunststoffflaschen mit drei unterschiedlichen Füllvolumina. Wie oben erwähnt hat in diesem Beispiel für den ersten Durchmesser D1 die größte Kunststofflasche 71a ein Füllvolumen von 0,75 l, die mittlere Kunststofflasche 72b ein Füllvolumen von 0,5 l und die kleinste Kunststoffflasche 72c ein Füllvolumen 0,2 l.

Das zweite Blasrad 56 umfasst mehrere Blasformen 101. Die Blasformen 101 sind jeweils genauso aufgebaut wie die Blasform 1. Insofern wird der Aufbau der Blasformen 101 nicht erneut beschrieben und es können identische Bezugszeichen wie für die Blasform 1 verwendet werden. Die Blasformen unterscheiden sich von der Blasform 1 durch einen größeren Durchmesser der Seitenwand 9 und des Formbodens 4. Sie sind außerdem zur Verarbeitung von Preforms eines dritten Preformtyps eingerichtet, wobei ein Mündungsbereich des dritten Preformtyp einen größeren Durchmesser aufweist als die Durchmesser der (identischen) Mündungsbereiche 41 des ersten Preformtyps und des zweiten Preformtyps.

Die Blasformen 101 sind zur Herstellung der Kunststoffflaschen 72a und 72b mit einem größeren, zweiten Durchmesser D2 (des Flaschenbauchs bzw. des Flaschenbodens) eingerichtet. In diesem Beispielfall beträgt der zweite Durchmesser D2 95 mm. Jede der Blasformen 101 des zweiten Blasrades 57 kann nacheinander wahlweise beliebig Kunststoffflaschen 72a und 72b herstellen. Das zweite Blasrad 57 kann also Kunststoffflaschen mit zumindest zwei unterschiedlichen Füllvolumina produzieren. Beispielsweise hat für den ersten Durchmesser D2 die größte Kunststofflasche 72a ein Füllvolumen von 1,5 l und die kleinste Kunststoffflasche 72b ein Füllvolumen 0,7 l.

Schließlich umfasst die Blasanlage 50 in Fig. 5 ein Ausgabesystem 58 zur Übergabe der hergestellten Kunststoffflaschen 71a, 71b, 71c, 72a, 72b an eine nachgeschaltete, nicht dargestellte Abfüllanlage.

Das Ausgabesystem 58 umfasst einen ersten Auslaufstern 59, der dem ersten Blasrad 56 nachgeschaltet ist, und drei Lufttransporteure 61a, 61b und 61c. In diesem Beispiel ist dem ersten Auslaufstern 59 für jede Ausführung von Kunststoffflaschen 71a, 71b, 71c, die von dem ersten Blasrad 56 herstellbar ist, jeweils ein separater Lufttransporteur 61a, 61b, 61c nachgeschaltet. Der Auslaufstern verteilt die von dem ersten Blasrad 56 hergestellten Kunststoffflaschen 71a, 71b, 71c nach Ausführung (und somit nach Füllvolumen) sortiert auf die Lufttransporteure 61a, 61b, 61c. Die Lufttransporteure 61a, 61b, 61c führen die Kunststoffflaschen 71a, 71b, 71c nach Füllvolumina getrennt zu unterschiedlichen Abfülllinien der Abfüllanlage.

Das Ausgabesystem 58 umfasst entsprechend einen zweiten Auslaufstern 60, der dem zweiten Blasrad 57 nachgeschaltet ist und drei Lufttransporteure 62a, 62b und 62c. In diesem Beispiel ist dem zweiten Auslaufstern 60 für jede Ausführung von Kunststoffflaschen 72a, 72b, die von dem zweiten Blasrad 54 herstellbar ist, jeweils ein separater Lufttransporteur 62a, 62b nachgeschaltet. Der Auslaufstern verteilt die von dem zweiten Blasrad 57 hergestellten Kunststoffflaschen 72a, 72b nach Ausführung (und somit nach Füllvolumen) sortiert auf die Lufttransporteure 62a, 62b. Die Lufttransporteure 62a, 62b führen die Kunststoffflaschen 72a, 72b nach Füllvolumina getrennt zu unterschiedlichen Abfülllinien der Abfüllanlage. Ein dritter Lufttransporteur 62c steht zur Verfügung, falls das zweite Blasrad 57 eine dritte Ausführung von Kunststoffflaschen mit dem zweiten Durchmesser D2 herstellen soll (nicht gezeigt).

Die vorgeschlagene Blasform und die vorgeschlagene Blasanlage erlauben eine kostengünstige, flexible und bedarfsgerechte Herstellung von Kunststoffflaschen mit unterschiedlichen Volumina durch Streckblasen in der Massenproduktion.

### Bezugszeichenliste:

- 1, 101: Blasform
- 2: äußere Form
- 2a: erste äußere Formhälfte
- 2b: zweite äußere Formhälfte
- 3: Innenform
- 3a: erste Innenformhälfte
- 3b: zweite Innenformhälfte
- 4: Formboden
- 4a: Zentralabschnitt
- 4b: Außenabschnitt
- 5: Einfahrmechanismus
- 6: Innenraum
- 7: Temperierkanal
- 8: Halsabschnitt
- 9: Seitenwand
- 10: Steilgewindespindel
- 11: Servomotor (mit Encoder)
- 12: Bremse
- 13: Endschalter
- 20: Handlingvorrichtung
- 21: Streckdorn-Antriebsvorrichtung
- 22: Streckdorn
- 23: Mündungsabschnitt
- 24: Neckringaufnahme
- 30a, 30b: Preform
- 40: Kunststoffflasche
- 41: Mündungsbereich
- 42: Neckring
- 43: Deckelgewinde
- 44: Flaschenhals
- 45: Flaschenbauch
- 46: Flaschenboden
- 50: Blasanlage
- 51a, 51b, 51c: Vorratssilo
- 52: Zulaufstern
- 53: gemeinsamer Ofen
- 54, 55: Übergabestern
- 56: erstes Blasrad
- 57: zweites Blasrad
- 58: Ausgabesystem
- 59: erster Auslaufstern
- 60: zweiter Auslaufstern
- 61a, 61b, 61c: Lufttransporteur
- 62a, 62b, 62c: Lufttransporteur
- 71a, 71b, 71c: Kunststoffflasche (mit erstem Durchmesser D1)
- 72a, 72b: Kunststoffflasche (mit zweitem Durchmesser D2)

- B1, B2: Bauchlänge
- D1: erster Durchmesser
- D2: zweiter Durchmesser
- L: Längsrichtung

## Patentansprüche

1. Blasanlage (50) zur Herstellung von Kunststoffflaschen (40, 71a, 71b, 71c, 72a, 72b) durch Streckblasen, wobei die Blasanlage (50) mindestens eine Blasform (1, 101) zur Herstellung von Kunststoffflaschen (40, 71a, 71b, 71c, 72a, 72b) durch Streckblasen umfasst, wobei die Kunststoffflaschen (40, 71a, 71b, 71c, 72a, 72b) jeweils zumindest einen Flaschenboden (46), einen Flaschenhals (44) und einen Mündungsbereich (41) aufweisen;
wobei die mindestens eine Blasform (1, 101) in einem geschlossenen Zustand der mindestens einen Blasform (1, 101) einen Innenraum (6, 23) mit einer Kavität (6) ausbildet, wobei sich der Innenraum (6) entlang einer Längsrichtung (L) von einem Mündungsabschnitt (23) für den Mündungsbereich (41) bis zu einem Formboden (4) zur Ausbildung des Flaschenbodens (46) erstreckt;
wobei eine Bauchlänge (B1, B2) der Kavität (6) in der Längsrichtung (L) zwischen einem Halsabschnitt (8) der Kavität (6) zur Ausbildung des Flaschenhalses (44) und dem Formboden (4) verstellbar ist, sodass die mindestens eine Blasform (1, 101) zum Herstellen von Kunststoffflaschen (40, 71a, 71b, 71b, 72a, 72b) mit unterschiedlichen Volumina ausgebildet ist; und
wobei die mindestens eine Blasform (1, 101) über eine Gesamtlänge des Innenraums (6, 23) in der Längsrichtung (L) seitlich öffenbar ist,
**dadurch gekennzeichnet, dass** die mindestens eine Blasform (1, 101) dazu eingerichtet ist, die Bauchlänge (B1, B2) automatisch einzustellen, und
dass die Blasanlage (50) dazu eingerichtet ist, einen Gesamthub eines Streckdorns (22) für das Streckblasen der jeweiligen Kunststoffflasche in der mindestens einen Blasform (1, 101) automatisch in Abhängigkeit von der Bauchlänge (B1, B2) einzustellen.

2. Blasanlage (50) nach Anspruch 1 **dadurch gekennzeichnet, dass** die mindestens eine Blasform (1, 101) über die Gesamtlänge des Innenraums (6, 23) quer zu der Längsrichtung (L) in zumindest ein erstes Formteil (1a) und ein zweites Formteil (1b) unterteilt ist, wobei das zweite Formteil (1b) zum Öffnen und Schließen der mindestens einen Blasform (1, 101) relativ zu dem ersten Formteil (1a)
• verschwenkbar ist und/oder
• zumindest im Wesentlichen quer zu der Längsrichtung (L) verfahrbar ist.

3. Blasanlage (50) nach einem der vorhergehenden Ansprüche, **dadurch gekennzeichnet, dass** der Formboden (4) der mindestens einen Blasform (1, 101) quer zu der Längsrichtung (L) gesehen in einen ersten Abschnitt (4a) und einen zweiten Abschnitt (4b) unterteilt ist, wobei der erste Abschnitt (4a) relativ zu dem zweiten Abschnitt (4b) entlang der Längsrichtung (L) verfahrbar ist.

4. Blasanlage (50) nach einem der vorhergehenden Ansprüche, **dadurch gekennzeichnet, dass** die mindestens eine Blasform (1, 101) eine Seitenwand (9) aufweist, die im geschlossenen Zustand der mindestens einen Blasform (1, 101) die Kavität (6) in einem Bauchabschnitt zur Ausbildung eines Flaschenbauchs (45) in einer Radialrichtung quer zur Längsrichtung (L) umgrenzt, wobei zum Verstellen der Bauchlänge (B1, B2)
• der Formboden (4) relativ zu der Seitenwand (9) verfahrbar ist und/oder
• ein oberer Abschnitt der mindestens einen Blasform (1, 101) relativ zu der Seitenwand (9) verfahrbar ist.

5. Blasanlage (50) nach einem der vorhergehenden Ansprüche, **gekennzeichnet durch** eine automatische Längsverstellung für den Formboden (4) der mindestens einen Blasform (1, 101), wobei die Längsverstellung dazu eingerichtet ist, den Formboden (4) der mindestens einen Blasform (1, 101) an verschiedenen Positionen entlang der Längsrichtung (L) zu verfahren und dort jeweils zu halten.

6. Blasanlage (50) nach Anspruch 5 **dadurch gekennzeichnet, dass** die automatische Längsverstellung für den Formboden (4) der mindestens einen Blasform (1, 101) eine Steilgewindespindel (10) und/oder einen Servomotor (11) umfasst.

7. Blasanlage (50) nach einem der Ansprüche 5 oder 6, **dadurch gekennzeichnet, dass** die automatische Längsverstellung für den Formboden (4) der mindestens einen Blasform (1, 101) eine Bremse (12) und/oder mehrere mechanische Rastpositionen aufweist.

8. Blasanlage (50) nach einem der vorhergehenden Ansprüche, **dadurch gekennzeichnet, dass** die Seitenwand (9) der mindestens einen Blasform (1, 101) schraubenförmige Rillen aufweist und dass der Formboden (4), wenn er entlang der Längsrichtung (L) verstellt wird, schraubenförmig entlang der Rillen bewegt wird.

9. Blasanlage (50) nach einem der vorhergehenden Ansprüche, **dadurch gekennzeichnet, dass** die mindestens eine Blasform (1, 101) über die Gesamtlänge des Innenraums (6, 23) in der Längsrichtung (L) seitlich öffenbar, ohne dass dafür die Bauchlänge (B1, B2) der Kavität (6) verändert werden muss.

10. Blasanlage (50) nach einem der vorhergehenden Ansprüche, **dadurch gekennzeichnet, dass** die Blasanlage (50) mindestens ein erstes Blasrad (56) umfasst, wobei das erste Blasrad (56) die mindestens eine Blasform (1, 101) aufweist.

11. Blasanlage (50) nach Anspruch 10, **dadurch gekennzeichnet, dass** die Blasanlage (50) dazu eingerichtet ist, der mindestens einen Blasform (1, 101) im Mischbetrieb nacheinander selektiv Preforms (30a, 30b) mehrerer unterschiedlicher Preformtyen zuzuführen.

12. Blasanlage (50) nach Anspruch 10 oder 11 mit zusätzlich mindestens einem zweiten Blasrad (57) und einem gemeinsamen Ofen (56) zum Vorwärmen von Preforms (30a, 30b) vor dem Streckblasen, **dadurch gekennzeichnet, dass** das zweite Blasrad (57) mindestens eine Blasform (101) nach einem der Ansprüche 1 bis 8 aufweist und dass die Blasanlage (50) eine Verteilvorrichtung (52) zur Zuführung vorgewärmter Preforms (30a, 30b) aus dem gemeinsamen Ofen (53) zu dem ersten Blasrad (56) und dem zweiten Blasrad (57) umfasst.

13. Blasanlage (50) nach einem der vorhergehenden Ansprüche, **gekennzeichnet durch** eine automatische Regelung für eine optimale Ausbringung von
• einer Anzahl von Kunststoffflaschen pro Zeiteinheit und/oder
• eines Gesamt-Füllvolumens der hergestellten Kunststofflaschen pro Zeiteinheit.

14. Verfahren zur Herstellung von Kunststoffflaschen (40, 71a, 71b, 71c, 72a, 72b) mit unterschiedlichen Volumina mittels derselben Blasform (1, 101) einer Blasanlage (50), wobei die Kunststoffflaschen (40, 71a, 71b, 71c, 72a, 72b) jeweils zumindest einen Flaschenboden (46), einen Flaschenhals (44) und einen Mündungsbereich (41) aufweisen,
wobei die Blasform (1, 101) in einem geschlossenen Zustand der Blasform (1, 101) einen Innenraum (6, 23) mit einer Kavität (6) ausbildet, wobei sich der Innenraum (6, 23) entlang einer Längsrichtung (L) von einem Mündungsabschnitt (23) für den Mündungsbereich (40) bis zu einem Formboden (4) zur Ausbildung des Flaschenbodens (46) erstreckt, umfassend folgende Schritte:
• Einbringen eines Preforms (30a, 30b) für die jeweilige Kunststofflasche (40, 71a, 71b, 71c, 72a, 72b) in die Blasform (1, 101) und Schließen der Blasform (1, 101);
• Einstellen einer Bauchlänge (B1, B2) der Kavität (6) in der Längsrichtung (L) zwischen einem Halsabschnitt (8) der Kavität (6) zur Ausbildung des Flaschenhalses (44) und dem Formboden (6) zum Einstellen des Volumens der jeweils herzustellenden Kunststoffflasche (40, 71a, 71b, 71b, 72a, 72b);
• Streckblasen der jeweiligen Kunststoffflasche (40, 71a, 71b, 71c, 72a, 72b) in der Blasform (1, 101); und
• Öffnen der Blasform (1, 101) und Entformen der Kunststoffflasche (40, 71a, 71b, 71c, 72a, 72b) seitlich zu der Längsrichtung (L),
**dadurch gekennzeichnet, dass** die Blasform (1, 101) die Bauchlänge (B1, B2) automatisch einstellt, und
dass die Blasanlage (50) einen Gesamthubs eines Streckdorns (22) für das Streckblasen der jeweiligen Kunststoffflasche (40, 71a, 71b, 71c, 72a, 72b) in der Blasform (1, 101) in Abhängigkeit von der Bauchlänge (B1, B2) automatisch einstellt.

15. Verfahren nach Anspruch 14, **gekennzeichnet durch** die folgenden Schritte:
• Bereitstellen unterschiedlicher Preformtypen, wobei sich die unterschiedlichen Preformtypen zumindest in ihrer geometrischen Struktur voneinander unterscheiden; und
• Auswählen eines Preforms (30a, 30b) von einem der unterschiedlichen Preformtypen für die jeweils herzustellende Kunststoffflasche (40, 71a, 71b, 71c, 72a, 72b) und selektives Zuführen dieses Preforms (30a, 30b) zu der Blasform (1, 101).

## Claims

1. Blow molding apparatus (50) for producing plastic bottles (40, 71a, 71b, 71c, 72a, 72b) by means of stretch blow molding, wherein the blow mold (50) comprises at least one blow mold (1, 101) for the production of plastic bottles (40, 71a, 71b, 71c, 71c, 72a, 72b) by means of stretch blow molding, wherein the plastic bottles (40, 71a, 71b, 71c, 72a, 72b) each comprise at least one bottle bottom (46), one bottle neck (44) and one mouth region (41);
wherein the at least one blow mold (1, 101) in a closed state of at least one blow mold (1, 101) forms an interior space (6, 23) with a cavity (6), wherein the interior space (6) extends along a longitudinal direction (L) from a mouth section (23) for the mouth region (41) to a mold bottom (4) for the formation of the bottle bottom (46);
wherein a body length (B1, B2) of the cavity (6) is adjustable in the longitudinal direction (L) between a neck section (8) of the cavity (6) for the formation of the bottle neck (44) and the mold bottom (4) so that at least one blow mold (1, 101) for the production of plastic bottles (40, 71a, 71b, 71b, 72a, 72b) with different volumes is formed; and
wherein the at least one blow mold (1, 101) is laterally openable across a total length of the interior space (6, 23) in the longitudinal direction (L), **characterized in that** the at least one blow mold (1, 101) is set up to automatically adjust the body length (B1, B2), and
that the blow molding apparatus (50) is set up to automatically adjust a total stroke of a stretch mandrel (22) for the stretch blow molding of the respective plastic bottle in at least one blow mold (1, 101) depending on the body length (B1, B2).

2. Blow molding apparatus (50) according to Claim 1, **characterized in that** the at least one blow mold (1, 101) is divided across the total length of the interior space (6, 23) transversely to the longitudinal direction (L) into at least one first molded part (1a) and a second molded part (1b), wherein the second molded part (1b) for opening and closing the at least one blow mold (1, 101) relative to the first mold (1a)
• can be pivoted and/or
• can be moved at least substantially transversely to the longitudinal direction (L).

3. Blow molding apparatus (50) according to any one of the preceding claims, **characterized in that** the mold bottom (4) of at least one blow mold (1, 101) transversely to the longitudinal direction (L) seen in a first section (4a) and a second section (4b) is divided, wherein the first section (4a) relative to the second section (4b) along the longitudinal direction (L) is movable.

4. Blow molding apparatus (50) according to any one of the preceding claims, **characterized in that** the at least one blow mold (1, 101) comprises a side wall (9) which, in the closed state of at least one blow mold (1, 101), delimits the cavity (6) in a body section for the formation of a bottle body (45) in a radial direction transversely to the longitudinal direction (L), wherein to adjust the body length (B1, B2)
• the molded floor (4) is movable relative to the side wall (9) and/or
• an upper section of at least one blow mold (1, 101) is movable relative to the side wall (9).

5. Blow molding apparatus (50) according to any one of the preceding claims, **characterized by** an automatic longitudinal adjustment system for the mold bottom (4) of at least one blow mold (1, 101), wherein the longitudinal adjustment system is set up to move the mold bottom (4) of at least one blow mold (1, 101) at different positions along the longitudinal direction (L) and to hold it there in each case.

6. Blow molding apparatus (50) according to Claim 5, **characterized in that** the automatic longitudinal adjustment system for the mold bottom (4) of at least one blow mold (1, 101) comprises a steep-threaded spindle (10) and/or a servo motor (11).

7. Blow molding apparatus (50) according to any one of the Claims 5 or 6, **characterized in that** the automatic longitudinal adjustment system for the mold bottom (4) of at least one blow mold (1, 101) comprises a brake (12) and/or a plurality of mechanical latching positions.

8. Blow molding apparatus (50) according to any one of the preceding claims, **characterized in that** the side wall (9) of at least one blow mold (1, 101) comprises screw-shaped grooves and that the mold bottom (4), if it is adjusted along the longitudinal direction (L), is moved along the grooves in a screw-shaped manner.

9. Blow molding apparatus (50) according to any one of the preceding claims, **characterized in that** the at least one blow mold (1, 101) is laterally openable across the total length of the interior space (6, 23) in the longitudinal direction (L) without having to change the body length (B1, B2) of the cavity (6).

10. Blow molding apparatus (50) according to any one of the preceding claims, **characterized in that** the blow molding apparatus (50) comprises at least one first blowing wheel (56), wherein the first blown wheel (56) comprises at least one blow mold (1, 101).

11. Blow molding apparatus (50) according to Claim 10, **characterized in that** the blow molding apparatus (50) is set up to feed at least one blow mold (1, 101) successively selectively preforms (30a, 30b) of a plurality of different preform types during mixed operation.

12. Blow molding apparatus (50) according to Claim 10 or 11 with additionally at least a second blowing wheel (57) and a common furnace (56) for preheating preforms (30a, 30b) prior to stretch blow molding, **characterized in that** the second blow mold (57) comprises at least one blow mold (101) according to any one of the Claims 1 to 8 and that the blow molding apparatus (50) comprises a distribution device (52) for feeding preheated preforms (30a, 30b) from the common furnace (53) to the first blowing wheel (56) and the second blowing wheel (57).

13. Blow molding apparatus (50) according to any one of the preceding claims, **characterized by** an automatic regulation for optimally outputting
• a quantity of plastic bottles per unit of time and/or
• a total filling volume of the produced plastic bottles per unit of time.

14. Method for the production of plastic bottles (40, 71a, 71b, 71c, 72a, 72b) with different volumes by means of the same blow mold (1, 101) of a blow molding apparatus (50), wherein the plastic bottles (40, 71a, 71b, 71c, 72a, 72b) each have at least one bottle bottom (46), one bottle neck (44) and one mouth region (41), wherein the blow mold (1, 101) in a closed state of the blow mold (1, 101) forms an interior space (6, 23) with a cavity (6), wherein the interior (6, 23) extends along a longitudinal direction (L) from an mouth section (23) for the mouth region (40) to a mold bottom (4) for the formation of the bottle bottom (46), comprising the following steps:
• Inserting a preform (30a, 30b) for the respective plastic flap (40, 71a, 71b, 71c, 72a, 72b) into the blow mold (1, 101) and closing the blow mold (1, 101);
• Setting an body length (B1, B2) of the cavity (6) in the longitudinal direction (L) between a neck section (8) of the cavity (6) for the formation of the bottle neck (44) and the mold bottom (6) for adjusting the volume of the plastic bottle to be produced (40, 71a, 71b, 71b, 72a, 72b);
• Stretch blow molding of the respective plastic bottle (40, 71a, 71b, 71c, 72a, 72b) in the blow mold (1, 101); and
• Opening the blow mold (1, 101) and demolding the plastic bottle (40, 71a, 71b, 71c, 72a, 72b) laterally to the longitudinal direction (L),
**characterized in that** the blow mold (1, 101) automatically adjusts the body length (B1, B2), and that the blow molding apparatus (50) automatically adjusts a total stroke of a stretch mandrel (22) for the stretch blow molding of the respective plastic bottle (40, 71a, 71b, 71c, 72a, 72b) in the blow mold (1, 101) depending on the body length (B1, B2).

15. The method according to Claim 14, **characterized by** the following steps:
• Providing different preform types, wherein the different preform types differ from each other at least with respect to their geometric structure; and
• Selecting a preform (30a, 30b) from one of the different preform types for the plastic bottle to be produced (40, 71a, 71b, 71c, 72a, 72b) and selectively feeding this preform (30a, 30b) to the blow mold (1, 101).

## Revendications

1. Ligne de soufflage (50), destinée à produire des bouteilles en matière plastique (40, 71a, 71b, 71c, 72a, 72b) par étirage-soufflage, la ligne de soufflage (50) comprenant au moins un moule de soufflage (1, 101) pour la production de bouteilles en matière plastique (40, 71a, 71b, 71c, 72a, 72b) par étirage-soufflage, les bouteilles en matière plastique (40, 71a, 71b, 71c, 72a, 72b) comportant chacune au moins un fond de bouteille (46), un goulot (44) et une zone d'embouchure (41) ;
lorsque l'au moins un moule de soufflage (1, 101) est fermé, l'au moins un moule de soufflage (1, 101) constituant un espace intérieur (6, 23) pourvu d'une cavité (6), l'espace intérieur (6) s'étendant le long d'une direction longitudinale (L) d'un tronçon d'embouchure (23) pour la zone d'embouchure (41) jusqu'à un fond de moule (4), pour créer le fond de bouteille (46) ;
une longueur de ventre (B1, B2) de la cavité (6) étant ajustable dans la direction longitudinale (L), entre un tronçon de goulot (8) de la cavité (6), destiné à créer le goulot (44) et le fond de moule (4), de sorte que l'au moins un moule de soufflage (1, 101) soit conçu pour produire des bouteilles en matière plastique (40, 71a, 71b, 71b, 72a, 72b) de différents volumes ; et l'au moins un moule de soufflage (1, 101) étant susceptible de s'ouvrir latéralement dans la direction longitudinale (L), sur une longueur totale de l'espace intérieur (6, 23),
**caractérisée en ce que** l'au moins un moule de soufflage (1, 101) est aménagé pour régler automatique la longueur de ventre (B1, B2), et **en ce que** la ligne de soufflage (50) est aménagée pour régler automatiquement en fonction de la longueur de ventre (B1, B2) une course totale d'une broche d'étirage (22) pour l'étirage-soufflage de la bouteille en matière plastique respective dans l'au moins un moule de soufflage (1, 101) .

2. Ligne de soufflage (50) selon la revendication 1, **caractérisée en ce que** l'au moins un moule de soufflage (1, 101) est divisé sur la longueur totale de l'espace intérieur (6, 23) à la transversale de la direction longitudinale (L) en au moins une première partie de moule (1a) et une deuxième partie de moule (1b), pour ouvrir et fermer l'au moins un moule de soufflage (1, 101), la deuxième partie de moule (1b) étant susceptible de pivoter par rapport à la première partie de moule (1a) et / ou étant déplaçable au moins sensiblement à la transversale de la direction longitudinale (L).

3. Ligne de soufflage (50) selon l'une quelconque des revendications précédentes, **caractérisée en ce que**, considéré à la transversale de la direction longitudinale (L), le fond de moule (4) de l'au moins un moule de soufflage (1, 101) est divisé en une première section (4a) et en une deuxième section (4b), la première section (4a) étant déplaçable par rapport à la deuxième section (4b) le long de la direction longitudinale (L).

4. Ligne de soufflage (50) selon l'une quelconque des revendications précédentes, **caractérisée en ce que** l'au moins un moule de soufflage (1, 101) comporte une paroi latérale (9), qui lorsque le moule de soufflage (1, 101) est fermé, pour créer un ventre de bouteille (45), délimite la cavité (6) dans un tronçon de ventre, dans une direction radiale, à la transversale de la direction longitudinale (L), pour ajuster la longueur de ventre (B1, B2)
• le fond de moule (4) étant déplaçable par rapport à la paroi latérale (9) et / ou
• une section supérieure de l'au moins un moule de soufflage (1, 101) étant déplaçable par rapport à la paroi latérale (9).

5. Ligne de soufflage (50) selon l'une quelconque des revendications précédentes, **caractérisée par** un ajustage en longueur automatique pour le fond de moule (4) de l'au moins un moule de soufflage (1, 101), l'ajustage en longueur étant ménagé pour déplacer le fond de moule (4) de l'au moins un moule de soufflage (1, 101) sur différentes positions le long de la direction longitudinale (L) et pour l'y maintenir respectivement.

6. Ligne de soufflage (50) selon la revendication 5, **caractérisée** en ce l'ajustage en longueur automatique pour le fond de moule (4) de l'au moins un moule de soufflage (1, 101) comprend une vis à pas rapide (10) et / ou un servomoteur (11).

7. Ligne de soufflage (50) selon l'une quelconque des revendications 5 ou 6, **caractérisée en ce que** l'ajustage en longueur automatique pour le fond de moule (4) de l'au moins un moule de soufflage (1, 101) comporte un frein (12) et / ou plusieurs positions d'enclenchement mécaniques.

8. Ligne de soufflage (50) selon l'une quelconque des revendications précédentes, **caractérisée en ce que** la paroi latérale (9) de l'au moins un moule de soufflage (1, 101) comporte des cannelures hélicoïdales et **en ce que** lorsqu'il est ajusté le long de la direction longitudinale (L), le fond de moule (4) est bougé de manière hélicoïdale le long des cannelures.

9. Ligne de soufflage (50) selon l'une quelconque des revendications précédentes, **caractérisée en ce que** l'au moins un moule de soufflage (1, 101) est susceptible de s'ouvrir latéralement dans la direction longitudinale (L) sur la longueur totale de l'espace intérieur (6, 23), sans qu'à cet effet, la longueur de ventre (B1, B2) de la cavité (6) ne doive être ajustée.

10. Ligne de soufflage (50) selon l'une quelconque des revendications précédentes, **caractérisée en ce que** la ligne de soufflage (50) comporte au moins une première roue de soufflage (56), la première roue de soufflage (56) comportant l'au moins un moule de soufflage (1, 101) .

11. Ligne de soufflage (50) selon la revendication 10, **caractérisée en ce que** la ligne de soufflage (50) est aménagée pour alimenter en fonctionnement mixte des préformes (30a, 30b) de plusieurs différents types de préforme, successivement de manière sélective vers l'au moins un moule de soufflage (1, 101).

12. Ligne de soufflage (50) selon la revendication 10 ou 11, pourvue additionnellement d'au moins une deuxième roue de soufflage (57) et d'un four (56) commun, destiné à préchauffer des préformes (30a, 30b) avant l'étirage-soufflage, **caractérisée en ce que** la deuxième roue de soufflage (57) comporte au moins un moule de soufflage (101) selon l'une quelconque des revendications 1 à 8 et **en ce que** la ligne de soufflage (50) comprend un dispositif de distribution (52), destiné à alimenter des préformes (30a, 30b) préchauffées à partir du four (53) commun vers la première roue de soufflage (56) et la deuxième roue de soufflage (57).

13. Ligne de soufflage (50) selon l'une quelconque des revendications précédentes, **caractérisée par** une régulation automatique, pour un rendement optimum
• d'un nombre de bouteilles en matière plastique par unité de temps et / ou
• d'un volume de remplissage total des bouteilles en matière plastique produites par unité de temps.

14. Procédé, destiné à produire des bouteilles en matière plastique (40, 71a, 71b, 71c, 72a, 72b) de différents volumes au moyen du même moule de soufflage (1, 101) d'une ligne de soufflage (50), les bouteilles en matière plastique (40, 71a, 71b, 71c, 72a, 72b) comportant chacune au moins un fond de bouteille (46), un goulot (44) et une zone d'embouchure (41),
lorsque le moule de soufflage (1, 101) est fermé, le moule de soufflage (1, 101) constituant un espace intérieur (6, 23) pourvu d'une cavité (6), l'espace intérieur (6, 23) s'étendant le long d'une direction longitudinale (L) d'un tronçon d'embouchure (23) pour la zone d'embouchure (40) jusqu'à un fond de moule (4), pour créer le fond de bouteille (46), comprenant les étapes suivantes, consistant à :
• introduire une préforme (30a, 30b) pour la bouteille en matière plastique (40, 71a, 71b, 71c, 72a, 72b) respective dans le moule de soufflage (1, 101) et fermer le moule de soufflage (1, 101) ;
• régler une longueur de ventre (B1, B2) de la cavité (6) dans la direction longitudinale (L), entre un tronçon de goulot (8) de la cavité (6) destiné à créer le goulot (44) et le fond de moule (6), pour régler le volume de la bouteille en matière plastique (40, 71a, 71b, 71b, 72a, 72b) qui doit être respectivement produite ;
• étirer-souffler la bouteille en matière plastique (40, 71a, 71b, 71c, 72a, 72b) respective dans le moule de soufflage (1, 101) ; et
• ouvrir le moule de soufflage (1, 101) et démouler la bouteille en matière plastique (40, 71a, 71b, 71c, 72a, 72b), latéralement à la direction longitudinale (L),
**caractérisé en ce que** le moule de soufflage (1, 101) règle automatiquement la longueur de ventre (B1, B2), et
**en ce que** la ligne de soufflage (50) règle automatiquement en fonction de la longueur de ventre (B1, B2) une course totale d'une broche d'étirage (22) pour l'étirage-soufflage de la bouteille en matière plastique (40, 71a, 71b, 71c, 72a, 72b) respective dans le moule de soufflage (1, 101).

15. Procédé selon la revendication 14, **caractérisé par** les étapes suivantes, consistant à :
• mettre à disposition différents types de préformes, les différents types de préformes se différenciant les uns des autres au moins par leur structure géométrique ; et
• sélectionner une préforme (30a, 30b) de l'un des différents types de préformes pour la bouteille en matière plastique (40, 71a, 71b, 71c, 72a, 72b) qui doit respectivement être produite et alimenter sélectivement ladite préforme (30a, 30b) vers le moule de soufflage (1, 101).
